# EUROPÄISCHE PATENTSCHRIFT

(11) **EP 4 236 112 B1**
(45) Veröffentlichungstag und Bekanntmachung des Hinweises auf die Patenterteilung: **08.10.2025**
(21) Anmeldenummer: 23157927.7
(22) Anmeldetag: 22.02.2023
(51) Int. Cl.: G02F 1/225, G02F 1/21, G01F 1/00, G05D 25/00, H04B 10/572

(54) **VORRICHTUNG UND VERFAHREN ZUR PHASENSTABILEN ÜBERTRAGUNG OPTISCHER SIGNALE**
DEVICE AND METHOD FOR THE STABLE PHASE TRANSMISSION OF OPTICAL SIGNALS
DISPOSITIF ET PROCÉDÉ DE TRANSMISSION DE SIGNAUX OPTIQUES À PHASE STABLE

(30) Priorität: 23.02.2022 DE 102022104332
(43) Veröffentlichungstag der Anmeldung: 30.08.2023
(73) Patentinhaber: Bundesrepublik Deutschland endvertreten durch den Präsidenten der Physikalisch-Technischen Bundesanstalt, 38116 Braunschweig (DE)
(72) Erfinder: BENKLER, Erik, 38112 Braunschweig (DE)
(74) Vertreter: Weilnau, Carsten

(56) Entgegenhaltungen:
- DE-A1- 102008 062 139
- WILCOX R ET AL: "Stable transmission of radio frequency signals on fiber links using interferometric delay sensing", OPTICS LETTERS, OPTICAL SOCIETY OF AMERICA, US, vol. 34, no. 20, 15 October 2009 (2009-10-15), pages 3050 - 3052, XP001549119, ISSN: 0146-9592, DOI: 10.1364/OL.34.003050
- NEWBURY N R ET AL: "COHERENT TRANSFER OF AN OPTICAL CARRIER OVER 251 KM", OPTICS LETTERS, OPTICAL SOCIETY OF AMERICA, US, vol. 32, no. 21, 1 November 2007 (2007-11-01), pages 3056 - 3058, XP001509583, ISSN: 0146-9592, DOI: 10.1364/OL.32.003056
- LONG-SHENG MA ET AL: "DELIVERING THE SAME OPTICAL FREQUENCY AT TWO PLACES: ACCURATE CANCELLATION OF PHASE NOISE INTRODUCED BY AN OPTICAL FIBER OR OTHERTIME-VARYING PATH", OPTICS LETTERS, OPTICAL SOCIETY OF AMERICA, US, vol. 19, no. 21, 1 November 1994 (1994-11-01), pages 1777 - 1779, XP000475860, ISSN: 0146-9592

## Beschreibung

### Technisches Gebiet

Die vorliegende Erfindung betrifft eine Vorrichtung und ein Verfahren zur phasenstabilen Übertragung optischer Signale, insbesondere zur Übertragung einer Referenzfrequenz oder eines Referenz- Signals von einem Referenz- bzw. Quellort an einen oder mehrere Zielorte.

Die Übertragung von Referenzfrequenzen von einem Referenzort an einen hiervon räumlich beabstandeten Zielort ist beispielsweise in der DE 10 2008 062 139 B4 beschrieben. Bekannte Vorrichtungen und Verfahren, die beispielsweise auch in P.A. Williams, W.C. Swann, and N.R. Newbury "High stability transfer of an optical frequency over long fiber-optic links" J. Opt. Soc. Am. B 25, S. 1284-1293, doi: 10.1364/JOSAB.25.001284 (2008) beschrieben sind, basieren hierbei ausschließlich auf der sogenannten Reziprozität der Lichtausbreitung entlang des Pfads zwischen einem Quellort und einem Zielort. Dies verbietet es, nicht reziproke Elemente in den zu stabilisierenden Pfad einzufügen oder dort vorzusehen.

Weiterhin ist aus der WILCOX R ET AL:"Stable transmission of radio frequency signals on fiber links using interferometric delay sensing", OPTICS LETTERS, OPTICAL SOCIETY OF AMERICA, US, Bd. 34, Nr. 20, 15. Oktober 2009 (2009-10-15), Seiten 3050-3052, XP001549119, ISSN: 0146-9592, DOI: 10.1364/OL.34.003050 eine stabile Transmission von Radiofrequenzsignalen über Faserverbindungen unter Nutzung einer interferometrischen Verzögerungsmessung bekannt.

Typischerweise kann eine Quelle zum Beispiel ein Lichtfeld aus einem Laser sein, dass auf einen ultrastabilen optischen Resonator oder auf einen optischen Frequenzstandard, wie etwa eine optische Uhr stabilisiert wurde. Eine derart hohe Frequenzstabilität oder Frequenzgenauigkeit soll an einen oder an mehreren anderen, eventuell weit hiervon entfernten Zielorten mit der gleichen Qualität, respektive Stabilität zur Verfügung gestellt werden. Unweigerliche Längenänderungen auf dem Übertragungspfad zwischen dem Quellort und dem Zielort, etwa aufgrund thermischer Einflüsse oder dergleichen veränderlichen Randbedingungen, führen zu zusätzlichen Frequenz- und Phaseninstabilitäten, denen durch geeignete Maßnahmen entgegenzuwirken ist.

Ferner ist es insbesondere für besonders lange Übertragungsstrecken wünschenswert, eine Verstärkung der optischen Signale entlang des optischen Pfads zwischen dem Quell- und Zielort bereitzustellen. Dies wird insbesondere benötigt, um auf langen Strecken, etwa im Bereich einiger Kilometer, bis hin zu mehreren 100 km unvermeidbare Verluste auszugleichen. Zudem wäre eine Aufteilung des optischen Pfads auf mehrere Zielorte wünschenswert, um das optische Referenzsignal nicht nur an einem einzigen, sondern an mehreren Zielorten gleichzeitig zur Verfügung stellen zu können.

Optische Verstärker können für die Verstärkung optischer Signale zwischen einem Quellort und einem Zielort bislang nur bedingt eingesetzt werden, da sie typischerweise die Reziprozitätsbedingung entlang des optischen Pfades zwischen dem Quell- und dem Zielort verletzen würden. Grundsätzlich existieren zwar auch bidirektionale, bzw. reziproke Verstärker. Deren Einsatz ginge aber mit anderen Problemen, etwa mit einem parasitären, d.h. unerwünschtem Lasing einher.

Es ist daher Zielsetzung der vorliegenden Erfindung, eine verbesserte Vorrichtung und ein verbessertes Verfahren zur phasenstabilen Übertragung optischer Signale bereitzustellen, die besonders einfach und effizient zu implementieren sind, welche eine phasenstabile Übertragung optischer Signale über vergleichsweise lange Strecken ermöglichen, die ferner das optische Referenzsignal am Quellort an mehrere Zielorte verteilen können, und die möglicherweise auch die Nutzung nichtlinearer Prozesse, wie zum Beispiel eine Frequenzverdopplung oder Superkontinuumserzeugung ermöglichen können.

Diese Aufgabe wird mit einer Vorrichtung und mit einem Verfahren gemäß den Merkmalen der unabhängigen Patentansprüche gelöst. Vorteilhafte Ausgestaltungen sind dabei jeweils Gegenstand abhängiger Patentansprüche.

In einem Aspekt ist eine Vorrichtung zur phasenstabilen Übertragung optischer Signale vorgesehen. Die Vorrichtung weist eine erste Lichtquelle zur Emission eines ersten Lichtstrahls auf. Die Vorrichtung umfasst ferner eine erste Interferometeranordnung, in welche der erste Lichtstrahl eingekoppelt ist und welche einen ersten Quellort sowie einen hiervon räumlich getrennten ersten Zielort umfasst. Mittels eines ersten Detektors ist hierbei eine Phase des ersten Lichtstrahls am ersten Quellort relativ zur Phase des ersten Lichtstrahls am ersten Zielort ermittelbar.

Die Vorrichtung weist ferner eine zweite Interferometeranordnung auf, welche einen zweiten Quellort und einen hiervon räumlich getrennten zweiten Zielort für einen zweiten Lichtstrahl umfasst. Der erste Zielort überlappt dabei räumlich mit dem zweiten Quellort.

Mittels eines zweiten Detektors ist eine Phase des zweiten Lichtstrahls am zweiten Quellort relativ zur Phase des zweiten Lichtstrahls am zweiten Zielort ermittelbar. Die zweite Interferometeranordnung ist ferner optisch mit der ersten Interferometeranordnung gekoppelt. Des Weiteren weist die Vorrichtung zumindest einen Regelkreis auf, welcher signaltechnisch mit dem ersten Detektor und mit dem zweiten Detektor gekoppelt ist. Der Regelkreis weist ferner ein erstes Stellglied auf, welches im Strahlengang des ersten Lichtstrahls und/oder im Strahlengang des zweiten Lichtstrahls angeordnet ist. Das Stellglied ist signaltechnisch mit dem ersten Detektor und mit dem zweiten Detektor gekoppelt.

Es kann unmittelbar oder mittelbar mit diesen beiden Detektoren gekoppelt sein. Insbesondere kann der Regelkreis ein oder mehrere elektronische Steuerungen aufweisen, welche dazu ausgestaltet sind, Signale von erstem und zweitem Detektor zu verarbeiten und basierend auf diesen Signalen ein Ansteuerungssignal für das zumindest erste Stellglied zu erzeugen. Mittels des ersten und im Strahlengang von erstem und/oder zweitem Lichtstrahl angeordneten Stellglieds kann eine feste Phasenbeziehung zwischen der Phase des ersten Lichtstrahls am ersten Quellort und der Phase des zweiten Lichtstrahls am zweiten Zielort eingestellt, geregelt oder fixiert werden.

Etwaige Phasen- oder Frequenzinstabilitäten des ersten Lichtstrahls zwischen dem ersten Quellort und dem zweiten Lichtstrahl am zweiten Zielort können mittels der ersten Interferometeranordnung mithilfe des ersten Detektors, mittels der zweiten Interferometeranordnung mithilfe des zweiten Detektors sowie aufgrund der Kopplung von erster und zweiter Interferometeranordnung ermittelt werden. Etwaige Phasen- und/oder Frequenzinstabilitäten drücken sich in einem Schwebungssignal auf dem jeweiligen Detektor aus, welches elektrisch bzw. elektronisch detektierbar und auswertbar ist.

Gleichermaßen kann auch im Bereich der ersten und/oder der zweiten Interferometeranordnung eine Phasen- und/oder Frequenzinstabilität zwischen dem ersten Quellort und dem ersten Zielort, respektive zwischen dem zweiten Quellort und dem zweiten Zielort interferometrisch gemessen und somit auch nicht nur qualitativ, sondern auch quantitativ erfasst werden. Mittels des zumindest einen Regelkreises und aufgrund der optischen Kopplung von erster und zweiter Interferometeranordnung ist es möglich, jegliche im Bereich der ersten und der zweiten Interferometeranordnung entstehende Phaseninstabilitäten und/oder Frequenzinstabilitäten quantitativ zu erfassen und dynamisch, etwa mithilfe des Regelkreises das im Strahlengang eines der genannten Lichtstrahlen angeordnete Stellglied derart anzusteuern, dass die Phase des zweiten Lichtstrahls am zweiten Zielort in einer festen Phasenbeziehung zur Phase des ersten Lichtstrahls am ersten Quellort steht.

Mittels der ersten Interferometeranordnung und der zweiten Interferometeranordnung sowie mittels der optischen Kopplung zwischen erster und zweiter Interferometeranordnung kann eine Kaskade bestehend aus einer ersten Interferometeranordnung und einer zweiten Interferometeranordnung, gegebenenfalls noch mit weiteren sich hieran anschließenden Interferometeranordnungen bereitgestellt werden, die eine phasenstabile Übertragung des optischen Signals vom ersten Quellort zu dem zweiten Zielort über vergleichsweise lange oder weitere Strecken ermöglicht.

In gleicher Art und Weise kann die Vorrichtung auch um weitere Interferometeranordnungen ergänzt werden. Jede weitere Interferometeranordnung weist einen weiteren Quellort und einen hiervon räumlich getrennten weiteren Zielort sowie einen Detektor auf, mittels welchem ein die Phase des weiteren Lichtstrahls am weiteren Quellort relativ zur Phase des weiteren Lichtstrahls am weiteren Zielort ermittelbar ist.

Die Kopplung dieses weiteren Detektors mit dem Regelkreis ermöglicht eine entsprechende Einbeziehung von Fluktuationen oder Phasen bzw. Frequenzinstabilitäten, die im Bereich der weiteren Interferometeranordnung entstehen können. Durch geeignete Ansteuerung des zumindest ersten Stellglieds können jegliche Phaseninstabilitäten oder Frequenzinstabilitäten aktiv, nämlich mittels des Regelkreises kompensiert werden, sodass eine feste Phasenbeziehung zwischen der Phase des ersten Lichtstrahls am ersten Quellort und der Phase des weiteren Lichtstrahls am weiteren Zielort einstellbar, regelbar oder fixierbar ist.

Die räumliche Überlappung des ersten Zielorts mit dem zweiten Quellort kann insbesondere mit einem teilreflektierenden, bzw. aber auch mit einem vollständig reflektierenden Spiegel verwirklicht werden. Der räumliche Überlapp von erstem Zielort mit dem zweiten Quellort ist für eine lückenlose Pfadstabilisierung ausgehend vom ersten Quellort bis hin zum zweiten Zielort und darüber hinaus von großem Vorteil. Der gesamte optische Pfad ausgehend vom ersten Quellort bis hin zum zweiten Zielort kann auf diese Art und Weise aktiv geregelt, bzw. im Hinblick auf seine Phasen- oder Frequenzstabilität geregelt werden.

Die erste Interferometeranordnung weist zumindest einen ersten Detektor auf. Die zweite Interferometeranordnung weist zumindest einen zweiten Detektor auf. Jede weitere, optionale Interferometeranordnung weist jeweils zumindest einen weiteren Detektor auf. Weitere Detektoren, etwa zur Bestimmung der optischen Kopplung zwischen der ersten und der zweiten Interferometeranordnung können ferner vorgesehen sein.

Der Regelkreis kann als globaler Regelkreis implementiert sein. Er kann Signale mehrerer Detektoren von unterschiedlichen Interferometeranordnungen verarbeiten, und auf Basis jener Signalverarbeitung zumindest ein Stellglied ansteuern, welches im Strahlengang zwischen dem ersten Quellort und dem zweiten Zielort angeordnet ist. Insoweit können sämtliche mittels Detektoren ermittelten Signale zur Ansteuerung des zumindest einen Stellglieds verwendet werden.

Bei weiteren Ausführungsformen der Vorrichtung kann vorgesehen sein, dass die Regelschleife mehrere Stellglieder aufweist. Beispielsweise kann die erste Interferometeranordnung mit einem eigenen Stellglied versehen sein. Auch die zweite Interferometeranordnung kann mit einem eigenen, etwa einem zweiten Stellglied versehen sein. Ferner ist denkbar, auch die optische Kopplung zwischen der ersten Interferometeranordnung und der zweiten Interferometeranordnung mit einem gesonderten Stellglied zu versehen.

Bei weiteren Ausführungsformen kann pro Regelkreis jeweils ein Stellglied vorgesehen sein. Jeder Regelkreis kann dabei mit zumindest einem oder mit mehreren Detektoren gekoppelt sein und die Signale des oder der betreffenden Detektoren zur Ansteuerung des zugehörigen Stellglieds nutzen.

Mittels eines ersten Stellglieds zwischen dem ersten Quellort und dem ersten Zielort können etwaige Pfadinstabilitäten, d.h. Phasen- oder Frequenzinstabilitäten im Bereich der ersten Interferometeranordnung kompensiert werden. Gleichermaßen können mit einem zweiten Stellglied im Bereich zwischen dem zweiten Quellort und dem zweiten Zielort etwaige Pfadinstabilitäten im Bereich der zweiten Interferometeranordnung kompensiert werden. Für die globale Kompensation etwaiger Pfadinstabilitäten zwischen dem ersten Quellort und dem zweiten Zielort kann es aber auch ausreichend sein, lediglich die auftretenden Instabilitäten im Bereich der ersten Interferometeranordnung und der zweiten Interferometeranordnung sensorisch, d.h. mittels erster und zweiter Detektoren zu erfassen und mittels einer entsprechenden Verarbeitung der so gewonnenen Detektorsignale ein einziges oder einige wenige Stellglieder entsprechend anzusteuern, sodass eine feste Phasenbeziehung zwischen der Phase des ersten Lichtstrahls am ersten Quellort und der Phase des zweiten Lichtstrahls am zweiten Zielort einstellbar, regelbar oder fixierbar ist.

Nach einer weiteren Ausführungsform der Vorrichtung weist die erste Interferometeranordnung einen ersten Pfadabschnitt auf, entlang welchem der erste Lichtstrahl propagiert. Die zweite Interferometeranordnung weist einen zweiten Pfadabschnitt auf, entlang welchem der zweite Lichtstrahl propagiert. Der erste Pfadabschnitt und der zweite Pfadabschnitt überlappen hierbei räumlich. Der erste Lichtstrahl und der zweite Lichtstrahl kopropagieren im Bereich des ersten und des zweiten Pfadabschnitts. Sie können im Bereich jener Pfadabschnitte miteinander interferieren. Es ist insbesondere vorgesehen, dass der erste Lichtstrahl und der zweite Lichtstrahl interferenzfähig sind. D.h. sie weisen eine Kohärenzlänge auf, die länger ist als etwaige Pfadunterschiede insbesondere im Bereich des ersten und des zweiten Pfadabschnitts.

Mittels erstem Pfadabschnitt und zweitem Pfadabschnitt, welche räumlich überlappend sein können, bzw. als Bestandteil der ersten Interferometeranordnung und auch als Bestandteil der zweiten Interferometeranordnung ausgestaltet sein können, ist eine optische Kopplung zwischen der ersten Interferometeranordnung und der zweiten Interferometeranordnung möglich. Mithin kann die erste Interferometeranordnung mit der zweiten Interferometeranordnung optisch gekoppelt sein. Ein Teilbereich eines Pfads des ersten Lichtstrahls der ersten Interferometeranordnung überlappt mit dem Teilbereich eines Pfads der zweiten Interferometeranordnung.

Nach einer weiteren Ausgestaltung sind der erste Pfadabschnitt und der zweite Pfadabschnitt von einem zumindest teilreflektierenden Spiegel begrenzt. Der teilreflektierende Spiegel ist dabei Bestandteil der ersten Interferometeranordnung und der zweiten Interferometeranordnung. Bei einigen Ausgestaltungen kann der den ersten und den zweiten Pfadabschnitt begrenzende teilreflektierende Spiegel auch als vollständig reflektierender Spiegel ausgestaltet sein. Ein teilreflektierender Spiegel ermöglicht die Implementierung einer Transmissionsgeometrie des Aufbaus, bzw. der Topologie der Vorrichtung. Mittels des teilreflektierenden Spiegels kann beispielsweise die erste Interferometeranordnung von der zweiten Interferometeranordnung getrennt, bzw. hiervon räumlich entkoppelt werden.

Nach einer weiteren Ausgestaltung bildet der zumindest teilreflektierende Spiegel den ersten Zielort und/oder den zweiten Quellort. Der erste Zielort und der zweite Quellort können beispielsweise zusammenfallen. Dies ist nicht nur für einen besonders einfachen Aufbau, sondern auch für eine besonders effiziente Signalverarbeitung von Vorteil. Die Implementierung von erstem Quellort und/oder zweitem Zielort mittels zumindest eines teilreflektierenden Spiegels ermöglicht insbesondere eine lückenlose Pfadstabilisierung ausgehend vom ersten Quellort bis hin zum zweiten Zielort. Insoweit kann mittels des zumindest teilreflektierenden Spiegels, welcher mit dem ersten Quellort und dem zweiten Zielort zusammenfällt oder diesen bildet, eine Ende-zu-Ende Pfadstabilisierung verwirklicht werden.

Nach einer weiteren vorteilhaften Ausgestaltung zweigt der zweite Lichtstrahl mittels eines Strahlteilers vom ersten Lichtstrahl ab. Der zweite Lichtstrahl kann insbesondere durch Strahlteilung des ersten Lichtstrahls erzeugt werden. Dies macht die Bereitstellung einer weiteren Lichtquelle entbehrlich. Der vom ersten Lichtstrahl abgezweigte zweite Lichtstrahl kann beispielsweise einem lichtverstärkenden Element, beispielsweise einem Faserverstärker zugeführt werden, um die optische Leistung des zweiten Lichtstrahls zu verstärken.

Dies erweist sich für die Signalübertragung über längere Strecken, etwa einigen Kilometern oder sogar mehreren 100 km als vorteilhaft. Das Vorsehen eines nicht reziproken Elements, etwa in Form eines Verstärkers im Strahlengang des zweiten Lichtstrahls stellt für die phasenstabile Übertragung des optischen Signals von dem ersten Quellort zum zweiten Zielort keinerlei Hindernis dar. Typischerweise befindet sich der Abzweig für den zweiten Lichtstrahl der zweiten Interferometeranordnung vorgelagert. Ein etwaiger optischer Verstärker ist dabei ebenfalls der zweiten Interferometeranordnung vorgelagert.

Insoweit kann nach einer weiteren Ausgestaltung vorgesehen sein, dass ein optisch nicht reziprokes Element im Strahlengang des zweiten Lichtstrahls vorgesehen ist. Es befindet sich typischerweise außerhalb des zweiten Pfadabschnitts, entlang welchem erster und zweiter Lichtstrahl der ersten und zweiten Interferometeranordnung propagieren. Das nicht reziproke Element kann beispielsweise als optischer Verstärker, etwa als Erbium dotierter optischer Faserverstärker, als halbleiteroptischer Verstärker oder als Brillouin-Verstärker implementiert sein.

Nach einer weiteren Ausgestaltung ist im Strahlengang des zweiten Lichtstrahls ein optischer Verstärker angeordnet. Dieser ist typischerweise als nicht reziprokes optisches Element implementiert. Bei dem optischen Verstärker kann es sich bspw. um einen Erbium-dotierten optischen Faserverstärker, um einen halbleiteroptischen Verstärker oder um einen Brillouin-Verstärker handeln.

Nach einer weiteren Ausgestaltung der Vorrichtung zur phasenstabilen Übertragung optischer Signale wird aus dem zweiten Lichtstrahl mittels eines Frequenz Konverters ein dritter Lichtstrahl mit fester Phasenbeziehung zum zweiten Lichtstrahl abgeleitet oder abgezweigt. Der dritte Lichtstrahl überlappt zumindest bereichsweise räumlich mit dem zweiten Lichtstrahl. Er weist jedoch eine andere Frequenz als der erste Lichtstrahl und/oder als der zweite Lichtstrahl auf. Die Frequenz des dritten Lichtstrahls kann beispielsweise gegenüber der Frequenz des zweiten Lichtstrahls verdoppelt sein. Die Konversioneffizienz des Frequenz Konverters beträgt typischerweise weniger als 100 %. Das bedeutet, dass nur ein Teil des zweiten Lichtstrahls in den dritten Lichtstrahl bei einer anderen Frequenz konvertierbar ist. Der zweite Lichtstrahl und der dritte Lichtstrahl kopropagieren dem Frequenzkonverter nachgelagert, sodass beispielsweise eine interferometrische Erfassung und Auswertung des kopropagierenden Strahlenbündels von zweitem und drittem Lichtstrahl allein oder überwiegend anhand der Komponente des zweiten Lichtstrahls erfolgen kann.

Nach einer Weiterbildung hierzu ist vorgesehen, dass zumindest ein Teilstrahl des ersten Lichtstrahls und zumindest ein Teilstrahl des zweiten Lichtstrahls entlang eines Kopplungspfads propagieren, der in einen dritten Detektor mündet, mittels welchem eine Phasenbeziehung zwischen dem ersten Lichtstrahl und dem zweiten Lichtstrahl im Bereich des Kopplungspfads ermittelbar ist. Mittels des Kopplungspfads kann beispielsweise eine Phasenbeziehung im Bereich der ersten Interferometeranordnung mit einer Phasenbeziehung im Bereich der zweiten Interferometeranordnung in Relation gesetzt werden.

Die Implementierung eines Kopplungspfads in Kombination mit einem dritten Detektor ermöglicht es, im Strahlengang des zweiten Lichtstrahls, bzw. dem zweiten Interferometer vorgelagert, ein nicht reziprokes optisches Element zu implementieren. Etwaige, durch das nicht reziprokes optisches Element verursachte Phasen- oder Frequenzinstabilitäten im Bereich des zweiten Lichtstrahls können mittels des Kopplungspfad und des dort vorgesehenen dritten Detektors qualitativ und quantitativ erfasst und zur Ansteuerung des zumindest einen Stellglieds effektiv verwendet werden. Etwaige vom nicht reziproken optischen Element verursachte Phasen- oder Frequenzinstabilitäten können auf diese Art und Weise kompensiert werden.

Nach einer weiteren Ausgestaltung ist ferner vorgesehen, dass der zumindest eine Regelkreis mit dem dritten Detektor signaltechnisch gekoppelt ist und ferner dazu ausgestaltet ist, mittels des zumindest ersten Stellglieds die feste Phasenbeziehung zwischen der Phase des ersten Lichtstrahls am ersten Quellort und der Phase des zweiten Lichtstrahls oder des dritten Lichtstrahls am zweiten Zielort unter Berücksichtigung oder Verwendung von Signalen des dritten Detektors einzustellen, zu regeln oder zu fixieren. Typischerweise ist der Regelkreis dazu ausgestaltet, Signale des ersten Detektors, des zweiten Detektors und Signale des dritten Detektors zur Ansteuerung des zumindest ersten Stellglieds zu verarbeiten, um die Phase des zweiten Lichtstrahls oder des dritten Lichtstrahls am zweiten Zielort im Hinblick auf die Phase des ersten Lichtstrahls am ersten Quellort einzustellen, zu regeln oder zu fixieren.

Nach einer weiteren Ausgestaltung der Vorrichtung weist diese eine zweite, den zweiten Lichtstrahl erzeugende Lichtquelle auf. Die zweite Lichtquelle dient der Erzeugung des zweiten Lichtstrahls. Die zweite Lichtquelle ist daher der zweiten Interferometeranordnung vorgelagert. Der zweite Lichtstrahl, welcher von der zweiten Lichtquelle emittiert wird kann in die zweite Interferometeranordnung eingekoppelt werden. Die erste und die zweite Lichtquelle können, müssen aber nicht die gleiche Frequenz aufweisen. Allerdings müssen erster und zweiter Lichtstrahl, welche von unterschiedlichen, nämlich von ersten und zweiten Lichtquellen erzeugt werden zumindest im Bereich des Kopplungspfad zueinander interferenzfähig sein.

Der zweite Lichtstrahl ist typischerweise mit einem eigenen Stellglied versehen, mittels welchem die Phase des zweiten Lichtstrahls bedarfsgerecht einstellbar ist. Insbesondere kann ein Signal des dritten Detektors entsprechend zur Ansteuerung des Stellglieds der zweiten Lichtquelle verwendet werden. Somit kann die Phase und/oder Frequenz der zweiten Lichtquelle präzise an die Phase und/oder Frequenz des ersten Lichtstrahls der ersten Lichtquelle angepasst werden.

Nach einer weiteren Ausgestaltung der Vorrichtung ist vorgesehen, dass der Regelkreis zur Verarbeitung von Signalen mehrerer Detektoren und zur Ansteuerung zumindest eines im Strahlengang zwischen dem ersten Quellort und dem zweiten Zielort angeordneten Stellglieds ausgestaltet ist.

Nach einer weiteren Ausgestaltung weist die erste Interferometeranordnung einen ersten polarisierenden Strahlteiler auf. Die zweite Interferometeranordnung weist einen zweiten polarisierenden Strahlteiler auf. Die polarisierenden Strahlteiler sind dabei beide im Strahlengang des ersten Lichtstrahls und/oder im Strahlengang des zweiten Lichtstrahls angeordnet. Mithin kann der erste polarisierende Strahlteiler im Strahlengang von erstem und zweitem Lichtstrahl angeordnet sein. Gleichermaßen kann der zweite polarisierende Strahlteiler im Strahlengang von erstem und zweitem Lichtstrahl angeordnet sein. Mittels erstem und zweitem polarisierenden Strahlteiler insbesondere in Kombination mit weiteren, die Polarisationsebene drehenden oder polarisationsfilternden Elementen im Strahlengang des ersten Lichtstrahls und/oder des zweiten Lichtstrahls kann ein Übersprechen zwischen der ersten Interferometeranordnung und der zweiten Interferometeranordnung, mithin eine unerwünschte Rückkopplung von optischen Signalen von Richtung Zielort zum Quellort unterdrückt werden.

Entsprechende Polarisationstechniken ermöglichen es beispielsweise, dass möglichst keine Lichtintensität des zweiten Lichtstrahls in Richtung zur ersten Lichtquelle, oder umgekehrt, möglichst keine Lichtintensität von der ersten Lichtquelle zur zweiten Lichtquelle, bzw. zum nicht reziproken optischen Element propagieren und dort eben auch keine Instabilitäten hervorrufen kann.

Mittels der hier beschriebenen Polarisationstechniken wird ferner effektiv verhindert, dass Licht von der zweiten Interferometeranordnung auf einen oder mehrere vorgelagerte Detektoren gelangt. Ansonsten würden dort zu viele Schwebungssignale, bzw. Schwebungsfrequenzen auftreten, die signaltechnisch nur noch recht schwierig voneinander zu trennen wären. Ferner wird hierdurch eine mögliche Sättigung eines dem Detektor zugeordneten Verstärkers verhindert, die ansonsten zur Erzeugung diverser Mischfrequenzen und harmonischen Vielfachen hiervon führen würde.

Nach einer weiteren Ausgestaltung der Vorrichtung ist vorgesehen, dass die zweite Interferometeranordnung einen ersten Zielpfad und zumindest einen zweiten Zielpfad aufweist, welcher mittels eines Strahlteilers vom ersten Zielpfad abzweigt. Dabei ist der zweite Zielort im ersten Zielpfad angeordnet. Es befindet sich ferner ein weiterer zweiter Zielort im zweiten Zielpfad. Zumindest einer von erstem und zweitem Zielpfad weist hierbei ein eigenes signaltechnisch mit dem zweiten Detektor gekoppeltes Stellglied zum Einstellen, Regeln oder Fixieren der Phase des zweiten Lichtstrahls am nachgelagerten zweiten Zielort relativ zur Phase des ersten Lichtstrahls am ersten Quellort auf.

Die Vorrichtung ist hierbei keineswegs auf den Abzweig lediglich eines ersten und eines zweiten Zielpfads beschränkt. Es können weitaus mehr Zielpfade vom ersten Zielpfad abgezweigt werden. Die Implementierung eines Abzweigs aus dem zweiten Zielpfad ermöglicht eine Aufteilung, etwa eine Art sternförmige Verteilung der Referenz des ersten Quellorts an mehrere zweite Zielorte. Der erste Zielpfad und der zweite Zielpfad sowie weitere Zielpfade können im Prinzip parallel zueinander ausgerichtet oder parallel miteinander optisch gekoppelt sein. Jeder der Zielpfade kann mit einem eigenen Stellglied versehen sein, um etwaige Pfadinstabilitäten im Bereich des jeweiligen Abzweigs bis zum jeweiligen Zielort bedarfsgerecht einstellen und Regeln zu können. Das Stellglied ist hierbei natürlich gleichermaßen in den Regelkreis implementiert.

Nach einer weiteren Ausgestaltung der Vorrichtung zur phasenstabilen Übertragung optischer Signale weist diese eine weitere Lichtquelle zur Erzeugung zumindest eines weiteren Lichtstrahls auf. Der weitere Lichtstrahl ist gegenüber dem ersten Lichtstrahl frequenzverschoben und überlagert mit dem ersten Lichtstrahl an einem Detektor. Jener Detektor kann ein mittels einer RF-Signalverarbeitungseinheit des zumindest eines Regelkreises spektral trennbares Schwebungssignal erzeugen, auf Basis dessen mit dem zumindest einen Stellglied die feste Phasenbeziehung zwischen der Phase des ersten Lichtstrahls am ersten Quellort und der Phase des zweiten Lichtstrahls am zweiten Zielort einstellbar, regelbar oder fixierbar ist.

Auf diese Art und Weise können Frequenzfluktuationen mehrerer Laserlichtquellen, nämlich der ersten Lichtquelle und der weiteren Lichtquelle, beispielsweise in Form ultrastabiler Laser im Mittel reduziert werden. Die Lichtstrahlen der ersten Lichtquelle und der weiteren Lichtquelle weisen hierbei einen Frequenzoffset zueinander auf. Dies kann beispielsweise durch geeignete Frequenzschieber vor einer Überlagerung der entsprechenden Lichtstrahlen erreicht werden.

Mittels einer gewichteten Addition, bzw. Subtraktion der jeweiligen Frequenzanteile des resultierenden Schwebungssignals lässt sich ein Signal für das zumindest erste Stellglied erzeugen, sodass eine Art gewichtete gemittelte Fluktuation mehrerer Lichtquellen als Quellsignal für den Quellort verwendet und dementsprechend an einen oder mehrere Zielorte übertragen werden kann.

Durch die Verwendung mehrerer Lichtquellen, die einen Frequenzoffset zueinander aufweisen, sowie durch die elektronische Auswertung eines resultierenden Schwebungssignals im Radiofrequenzbereich kann quasi ein Komposit-Quellsignal am ersten Quellort verwendet werden, welches für sich betrachtet eine nochmals höhere Stabilität als die einzelnen Lichtquellen aufweist. So kann beispielsweise eine Langzeitdrift eines Resonators eliminiert werden, nur dass das Steuersignal aus einem Vergleich mit einem langzeitstabilen Frequenzstandard, beispielsweise einer Atomuhr bestimmt wird.

Nach einer weiteren Ausführungsform kann die erste Interferometeranordnung und/oder die zweite Interferometeranordnung fasertechnisch implementiert sein. Hierbei können ein oder mehrere optische Pfade, etwa vom ersten Quellort zum ersten Zielort oder etwa vom zweiten Quellort zum zweiten Zielort, mithin auch der gesamte optische Pfad vom ersten Quellort zum zweiten Zielort fasertechnisch implementiert sein. Die optischen Fasern können als nicht-polarisationserhaltende Fasern ausgestaltet sein. Mittels des Regelkreises, dem ersten Detektor und dem zweiten Detektor sowie mittels des Stellglieds ist es möglich, die durch die Faser bedingten Phaseninstabilitäten zwischen den Quell- und Zielorten durch eine aktive Regelung effektiv zu kompensieren.

Es ist hierbei möglich, dass im optischen Pfad der ersten Interferometeranordnung und/oder der zweiten Interferometeranordnung eine vergleichsweise lange Faserstrecke implementiert ist, die mehrere Kilometer, etwa 50 km, 100 km oder mehr betragen kann.

Nach einer weiteren Ausführungsform ist eine Verstärkereinheit vorgesehen, welche ein abgeschlossenes, d.h. feuchtigkeits- und/oder staubdichtes Gehäuse aufweist. In dem Gehäuse können überwiegende Teile und Komponenten der ersten und/oder der zweiten Interferometeranordnung angeordnet sein. Insbesondere können ein nicht reziprokes optisches Element, etwa in Form einer Lichtquelle oder eines optischen Verstärkers für den zweiten Lichtstrahl sowie im jeweiligen optischen Pfad nachgelagerte Detektoren, Regelkreise und Stellglieder in dem Gehäuse angeordnet sein.

Dieses kann insoweit und abgesehen von einer entsprechenden Energieversorgung vollkommen autark ausgestaltet und in eine See- und/oder Langstreckenkabelverbindung integriert sein. Somit können vergleichsweise lange Pfade und große Strecken zwischen dem Quellort und Zielorten verwirklicht werden, die z.B. mehrere 100 km betragen. Zwischen einem ersten Quellort und einem n-ten Zielort können in regelmäßigen Abständen, etwa alle 50 bis 200 km entsprechende Verstärkereinheiten vorgesehen werden.

Nach einem weiteren Aspekt betrifft die vorliegende Erfindung schließlich ein Verfahren zur phasenstabilen Übertragung optischer Signale. Das Verfahren kann vorzugsweise mit einer zuvor beschriebenen Vorrichtung zur phasenstabilen Übertragung optischer Signale implementiert und verwirklicht werden. Insoweit gelten sämtliche Merkmale, Vorteile, Eigenschaften und Effekte, die zuvor im Hinblick auf die Vorrichtung zur phasenstabilen Übertragung optischer Signale beschrieben und erläutert wurden auch gleichermaßen für das Verfahren; und umgekehrt.

Zu einer grundlegenden Implementierung muss das Verfahren aber nicht zwangsläufig mit der hier beschriebenen Vorrichtung betrieben werden. Mit anderen Worten ist es nicht auf die Implementierung der zuvor beschriebenen Vorrichtung beschränkt. Das Verfahren zur phasenstabilen Übertragung optischer Signale umfasst mehrere Verfahrensschritte, die gleichzeitig, bzw. kontinuierlich ablaufen können. In einem ersten Verfahrensschritt wird z.B. ein erster Lichtstrahl mittels einer ersten Lichtquelle erzeugt. Alsdann wird der erste Lichtstrahl in eine erste Interferometeranordnung eingekoppelt, welche einen ersten Quellort und einen hiervon räumlich getrennten ersten Zielort umfasst.

Mittels eines ersten Detektors wird dabei eine Phase des ersten Lichtstrahls am ersten Quellort relativ zur Phase des ersten Lichtstrahls am ersten Zielort ermittelt. Ein zweiter Lichtstrahl wird in eine zweite Interferometeranordnung eingekoppelt, welche optisch mit der ersten Interferometeranordnung gekoppelt ist und welche einen zweiten Quellort und einen hiervon räumlich getrennten zweiten Zielort umfasst. Ähnlich wie bei der ersten Interferometeranordnung wird auch bei der zweiten Interferometeranordnung mittels eines zweiten Detektors eine Phase des zweiten Lichtstrahls am zweiten Quellort relativ zur Phase des zweiten Lichtstrahls am zweiten Zielort ermittelt.

Mittels zumindest eines ersten im Strahlengang des ersten Lichtstrahls und/oder des zweiten Lichtstrahls angeordneten Stellglieds eines Regelkreises, welcher signaltechnisch mit dem ersten Detektor und mit dem zweiten Detektor gekoppelt ist, wird alsdann eine feste Phasenbeziehung zwischen der Phase des ersten Lichtstrahls am ersten Quellort und der Phase des zweiten Lichtstrahls am zweiten Zielort eingestellt, geregelt oder fixiert.

Wie bereits ausgeführt kann das hier beschriebene Verfahren mit einer zuvor beschriebenen Vorrichtung zur phasenstabilen Übertragung optischer Signale umgesetzt werden. Vorteilhafte Ausgestaltungen, Effekte, Wirkungen und Merkmale, die zuvor zur Vorrichtung beschrieben wurden gelten auch gleichermaßen für das hier vorliegende Verfahren, weshalb zu weiteren Verfahrensschritten auf die vorliegenden Ausführungen zur Vorrichtung verwiesen werden können.

Zusammenfassend können mit der hier beschriebenen Vorrichtung und dem hiermit in Rede stehenden Verfahren bisher ungelöste Probleme bei der Übertragung optischer Träger- oder Differenzfrequenzen über eine Übertragungsstrecke zwischen zwei oder mehreren Orten gelöst werden. Insbesondere ermöglicht die Vorrichtung eine echte Ende-zu-Ende Stabilisierung zwischen einem Quellort und einem Zielort, wobei je nach konkreten Anforderungen eine beliebige Skalier- und Kaskadierbarkeit sowie die Möglichkeit zur Implementierung nicht reziproker optischer Elemente zur Pfadstabilisierung gegeben wird. Eine Phasen- und Frequenzverteilung kann ferner über vergleichsweise lange Strecken ermöglicht werden. Dies ermöglicht insbesondere eine phasen- und/oder frequenzstabile Übersee- und/oder Interkontinentalübertragung hochstabiler, bzw. hochgenauer Frequenzen.

Das Projekt 18SIB05 ROCIT, welches zur vorliegenden Erfindung und zum vorliegenden Antrag auf Patenterteilung führte, wurde aus dem von den Teilnehmerstaaten kofinanzierten EMPIR Programm aus dem Forschungs- und Innovationsprogramm Horizont 2020 der Europäischen Union finanziert.

Weitere Ziele, Merkmale sowie vorteilhafte Anwendungsmöglichkeiten werden nachfolgend anhand konkreter Ausführungsbeispiel unter Bezugnahme auf die Zeichnungen erläutert. Hierbei zeigen:
- Fig. 1: eine schematische Darstellung einer Interferometeranordnung,
- Fig. 2: eine schematische Darstellung einer Vorrichtung zur phasenstabilen Übertragung optischer Signale gemäß einer ersten Ausführungsform der Erfindung,
- Fig. 3: eine weitere Ausführungsform der Vorrichtung zur phasenstabilen Übertragung optischer Signale,
- Fig. 4: eine schematische Darstellung eines Regelkreises,
- Fig. 5: ein weiteres Ausführungsbeispiel der Vorrichtung,
- Fig. 6: eine schematische Darstellung eines Regelkreises,
- Fig. 7: die schematische Darstellung einer weiteren Ausführungsform der Vorrichtung zur phasenstabilen Übertragung optischer Signale,
- Fig. 8: ein weiteres Ausführungsbeispiel einer Vorrichtung zur phasenstabilen Übertragung optischer Signale mit mehreren Zielpfaden,
- Fig. 9: ein weiteres Ausführungsbeispiel einer solchen Vorrichtung mit einer weiteren Lichtquelle, insbesondere zur Erzeugung eines Komposit Regelungssignals,
- Fig. 10: ein weiteres Ausführungsbeispiel mit einem Frequenzkonverter als nicht reziprokem optischen Element,
- Fig. 11: ein Flussdiagramm eines Verfahrens zur phasenstabilen Übertragung optischer Signale und
- Fig. 12: ein weiteres Ausführungsbeispiel der Vorrichtung, bei welchem die optischen Pfade der Interferometer Anordnungen fasertechnisch implementiert sind.

### Detaillierte Beschreibung

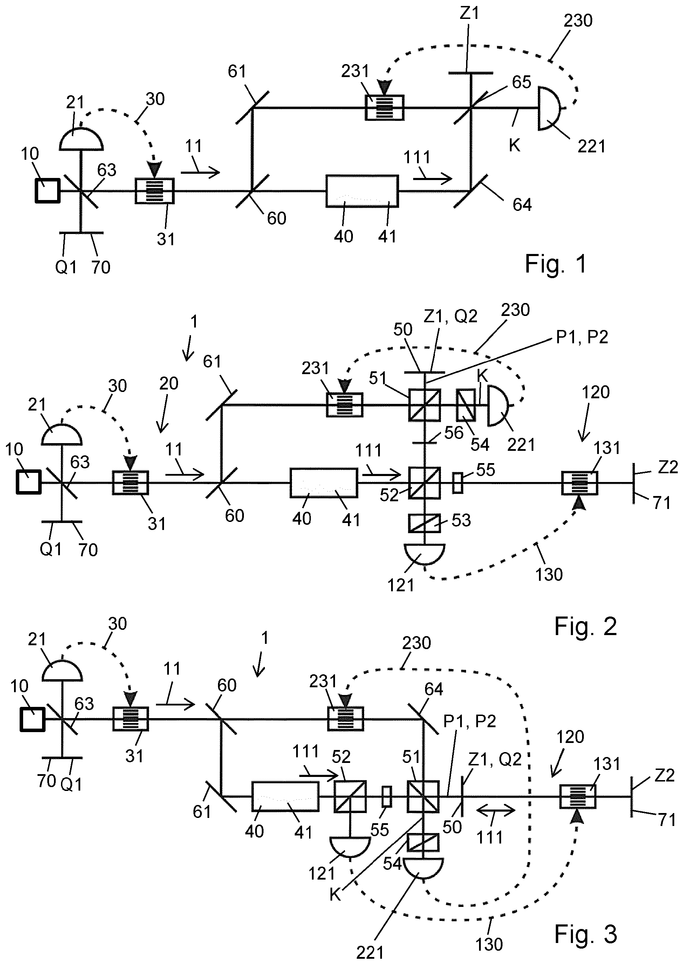

In Fig. 2 ist ein erstes Ausführungsbeispiel einer Vorrichtung 1 zur phasenstabilen Übertragung optischer Signale schematisch gezeigt. Die Vorrichtung 1 umfasst eine erste Interferometeranordnung 20 sowie eine zweite Interferometeranordnung 120. Die Vorrichtung 1 umfasst ferner eine erste Lichtquelle 10. Die Lichtquelle 10 ist zur Erzeugung eines ersten Lichtstrahls 11 ausgestaltet. Dieser propagiert von der Lichtquelle 10 über einen Strahlteiler 63 einerseits zu einem Spiegel 70, welcher als erster Quellort Q1 implementiert ist. Ferner propagiert der erste Lichtstrahl 11, bzw. ein Teilstrahl hiervon ausgehend vom Strahlteiler 63 über weitere Spiegel 60, 61 und einen polarisierenden Strahlteiler 51 zu einem weiteren Spiegel 50, welcher als erster Zielort Z1 implementiert ist. Der Strahlteiler 63 bildet mit den am Quellort Q1 und Zielort Z1 vorgesehenen Spiegeln 50, 70 ein Michelson Interferometer.

Der optische Pfad zwischen dem Strahlteiler 63 und dem ersten Quellort Q1 fungiert als Referenzpfad. Der Pfad zwischen dem Strahlteiler 63 und dem Spiegel 50, mithin dem ersten Zielort Z1 fungiert als Signalpfad. Die am Quellort Q1 und am Zielort Z1 reflektierten Teilstrahlen des ersten Lichtstrahls 11 rekombinieren am Strahlteiler 63 und werden von dort auf den ersten Detektor 21 gerichtet. Mittels des ersten Detektors 21 kann ein Interferenzsignal, mithin ein Schwebungssignal detektiert werden, welches Aufschluss über die Phase des ersten Lichtstrahls 11 am ersten Quellort Q1 relativ zur Phase des ersten Lichtstrahls 11 am ersten Zielort Z1 gibt.

Es ist ferner ein Regelkreis 30 vorgesehen. Der Regelkreis 30 ist signaltechnisch mit dem ersten Detektor 21 gekoppelt und umfasst ein Stellglied 31, welches im Strahlengang des ersten Lichtstrahls 11 angeordnet ist. Das erste Stellglied 31 kann beispielsweise als Frequenz- oder Phasenmodulator, etwa als akustooptischer oder als elektrooptischer Modulator implementiert sein. Etwaige Phasenfluktuationen zwischen der Phase des ersten Lichtstrahls am ersten Quellort Q1 und der Phase des ersten Lichtstrahls 11 am ersten Zielort Z1 können mittels des ersten Detektors 21 signaltechnisch erfasst
werden. Mittels einer mit dem ersten Detektor 21 gekoppelten Regelschleife oder eines entsprechenden Regelkreises 30 kann durch entsprechende Ansteuerung des ersten Stellglieds 31 eine etwaige Phasenfluktuation derart kompensiert werden, dass die Phase des ersten Lichtstrahls 11 am ersten Zielort Z1 in einer festen Beziehung zur Phase des ersten Lichtstrahls 11 am ersten Quellort Q1 ist.

Die hier beschriebene Vorrichtung 1 weist ferner eine zweite Interferometeranordnung 120 auf. Diese weist einen zweiten Quellort Q2 und einen hiervon räumlich getrennten zweiten Zielort Z2 auf. Im vorliegenden Ausführungsbeispiel fällt der zweite Quellort Q2 mit dem ersten Zielort Z1, mithin mit dem Spiegel 50 zusammen. Die zweite Interferometeranordnung 120 kann ebenfalls als Michelson Interferometer implementiert sein. Anderweitige Interferometerausgestaltungen, etwa nach Art eines Mach-Zender Interferometers, sind gleichermaßen denkbar. Ein zweiter Lichtstrahl 111, welcher über einen polarisierenden Strahlteiler 52 in die zweite Interferometeranordnung 120 eingekoppelt wird, erfährt eine Aufteilung am polarisierenden Strahlteiler 52. Ein Teil des zweiten Lichtstrahls propagiert in Richtung zum zweiten Zielort Z2, welcher als Spiegel 71 implementiert ist. Ein anderer Teil des zweiten Lichtstrahls 111 wird am polarisierenden Strahlteiler 52 in Richtung zum ersten Zielort Z1, mithin zum zweiten Quellort Q2 abgelenkt.

Die vom zweiten Quellort Q2 und vom zweiten Zielort Z2 reflektierten Teilstrahlen des zweiten Lichtstrahls 111 rekombinieren am polarisierenden Strahlteiler 52 und kopropagieren zum zweiten Detektor 121. Hinter dem Polarisator 53 kann mittels des zweiten Detektors 121 die Phase des zweiten Lichtstrahls 111 am zweiten Quellort Q2 relativ zur Phase des zweiten Lichtstrahls 111 am zweiten Zielort Z2 ermittelt, bzw. bestimmt werden. Die zweite Interferometeranordnung 120 ist mit einem eigenen, mithin mit einem zweiten Regelkreis 130 ausgestattet. Signale des zweiten Detektors 121 können elektronisch verarbeitet und zur Ansteuerung eines zweiten Stellglieds 131 im Strahlengang des zweiten Lichtstrahls 111 verwendet werden. Das zweite Stellglied 131 befindet sich dem zweiten Zielort Z2 vorgelagert. Mittels des zweiten Regelkreises 130 können etwaige Fluktuation, d.h. Phasen- und/oder Frequenzinstabilitäten des zweiten Lichtstrahls 111 interferometrisch erfasst und dementsprechend durch gezielte Ansteuerung des Stellglieds 131, welches ebenfalls als Modulator ausgestaltet ist, kompensiert werden.

Es ist hierbei insbesondere vorgesehen, dass die erste Interferometeranordnung 20 und die zweite Interferometeranordnung 120 miteinander optisch gekoppelt sind. Die optische Kopplung kann auf unterschiedliche oder vielfältigste Weise implementiert werden. Einerseits kann der erste Lichtstrahl 11 entlang eines ersten Pfadabschnitt P1 propagieren, welche zumindest bereichsweise oder abschnittsweise mit einem zweiten Pfadabschnitt P2 räumlich überlappt, entlang welchem der zweite Lichtstrahl 111 propagiert. Im gezeigten Ausführungsbeispiel befinden sich solche ersten und zweiten Pfadabschnitte P1, P2 zwischen dem polarisierenden Strahlteiler 51 und dem Spiegel 50, mithin zwischen dem Strahlteiler 51 und dem ersten Zielort Z1 sowie dem zweiten Quellort Q2.

Weiterhin kann vorgesehen sein, dass der erste Lichtstrahl 11 und der zweite Lichtstrahl 111 entlang eines Kopplungspfads K propagieren, der in einen weiteren Detektor, mithin in einen dritten Detektor 221 mündet. Mittels des dritten Detektors 221 kann eine Phasenbeziehung zwischen dem ersten Lichtstrahl 11 und dem zweiten Lichtstrahl 111 im Bereich des Kopplungspfads ermittelt werden. Die Signale des dritten Detektors 221 können mittels eines dritten Regelkreises 230 verarbeitet werden, welcher ein drittes Stellglied 231 umfasst. Im Ausführungsbeispiel der Fig. 2 ist das dritte Stellglied 231 im Strahlengang des ersten Lichtstrahls 11 angeordnet. Es könnte aber auch alternativ hierzu im Strahlengang des zweiten Lichtstrahls 111 angeordnet sein.

Etwaige Fluktuationen oder Frequenz- und/oder Phaseninstabilitäten, welche im Bereich einer jeden einzelnen Interferometeranordnung 20, 120 auftreten können sind mit dem ersten Detektor 21 und mit dem zweiten Detektor 121 interferometrisch erfassbar und/oder quantitativ messbar. Eine Kopplung der ersten und zweiten Interferometeranordnung 20, 120 untereinander kann insbesondere durch Implementierung des Kopplungspfads K sowie durch interferometrische Überlagerung von Teilstrahlen aus der ersten Interferometeranordnung 20 und der zweiten Interferometeranordnung 120 gemessen werden.

Mittels des dritten Detektors 221 und eines hiermit gekoppelten, bzw. mittels des dritten Detektors steuerbaren Stellglieds 231 kann letztlich eine feste Phasenbeziehung zwischen dem ersten Lichtstrahl 11 im Bereich der ersten Interferometeranordnung 20 und dem zweiten Lichtstrahl 111 im Bereich der zweiten Interferometeranordnung 120 hergestellt werden. Somit kann letztlich eine feste Phasenbeziehung zwischen der Phase des ersten Lichtstrahls 11 am ersten Quellort Q1 und der Phase des zweiten Lichtstrahls am zweiten Zielort Z2 eingestellt, geregelt oder fixiert werden.

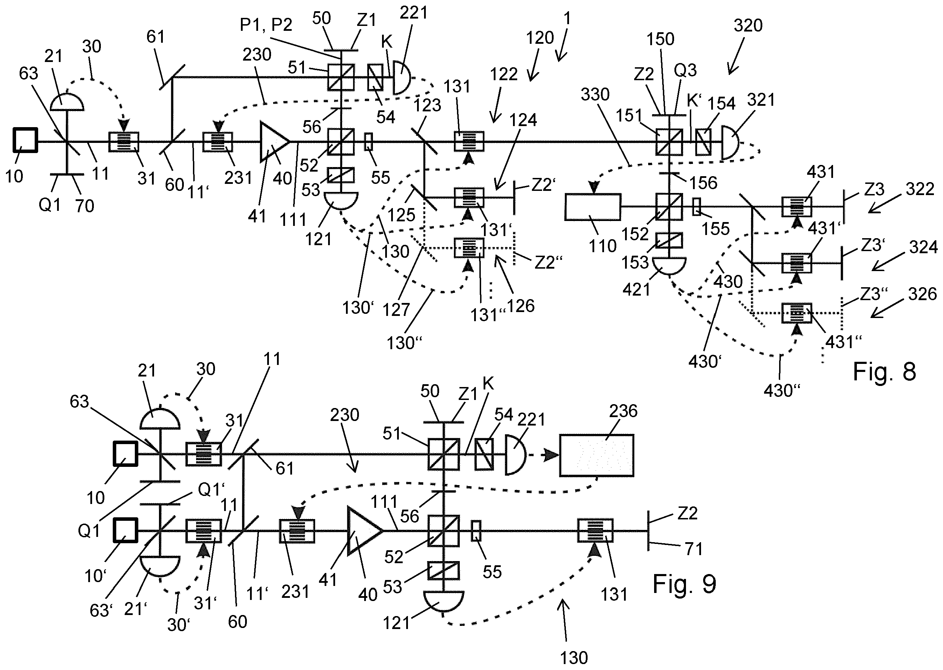

Indem insbesondere der erste Zielort Z1 mit dem zweiten Quellort Q2 zusammenfällt kann insoweit eine mehrstufige und insoweit kaskadierende Anordnung mehrerer solcher Interferometeranordnungen 20, 120 realisiert werden. Bei Bedarf kann auch der zweite Zielort Z2 wiederum als dritter Quellort Q3 fungieren, sodass die optischen Signale entsprechend auch an einen weiteren dritten Zielort Z3 übertragen werden können, wie dies beispielsweise bei der Ausführungsform gemäß Fig. 8 der Fall ist.

In dem in Fig. 2 gezeigten Ausführungsbeispiel kann ferner im Strahlengang des zweiten Lichtstrahls 111 ein nicht reziprokes optisches Element 40 angeordnet sein. Dieses kann beispielsweise als optischer Verstärker 41 implementiert sein. Das nicht reziproke optische Element 40 kann beispielsweise vom ersten Lichtstrahl 11 gespeist sein und so einen verstärkten zweiten Lichtstrahl 111 erzeugen. Mithin kann der zweite Lichtstrahl 111 das Ergebnis einer Verstärkung eines Abzweigs des ersten Lichtstrahls 11 sein.

Von Vorteil ist das nicht reziproke optische Element 40 außerhalb sowohl der ersten Interferometeranordnung 20 als auch außerhalb der zweiten Interferometeranordnung 120 vorgesehen und angeordnet. Insoweit kann das nicht reziproke optische Element keinen nachteiligen Effekt auf die phasenstabile Übertragung des optischen Signals haben. Der zweite Lichtstrahl 111, welcher im Ausführungsbeispiele Fig. 2 vom nicht reziproken optischen Elements 40 ausgeht, kann über den Kopplungspfad K und mittels des dritten Detektors 221 hinsichtlich seiner Phase und/oder Frequenz an den ersten Lichtstrahl 11 gekoppelt werden.

Jener Zusammenhang ist ferner auch nochmals in der gesonderten Darstellung gemäß Fig. 1 illustriert. Dort ist anstelle des polarisierenden Strahlteilers 51 aus Fig. 2 ein gewöhnlicher Strahlteiler 65 vorgesehen. Der erste Lichtstrahl 11 und der zweite Lichtstrahl 111 kopropagieren hier entlang des Kopplungspfad K. Dort können sie miteinander interferieren. Ein entsprechendes Interferenzmuster, bzw. eine von der Strahlinterferenz gebildete zeitliche Schwebung der resultierenden Lichtintensität kann am dritten Detektor 221 ermittelt und zur Ansteuerung eines Stellglieds 231 verwendet werden. Insoweit können der erste Lichtstrahl 11 und der zweite Lichtstrahl 111 phasenstarr miteinander gekoppelt werden. Das Stellglied 231 kann alternativ auch im Strahlengang des zweiten Lichtstrahls 111 implementiert werden.

Im Ausführungsbeispiel der Fig. 2 wird ferner ein Übersprechen unerwünschter Signale zwischen den einzelnen Teilpfaden durch eine Polarisationstechnik unterdrückt. So ist insbesondere vorgesehen, dass die Polarisation des zweiten Lichtstrahls 111 so eingestellt ist, dass der größte Teil des Lichtstrahls 111 durch den polarisierenden Strahlteiler 52 transmittiert. Es wird nur ein geringerer Anteil des zweiten Lichtstrahls 111 am Strahlteiler 52 in Richtung zum ersten Strahlteiler 51 reflektiert. Der am Strahlteiler 52 reflektierte Anteil des zweiten Lichtstrahls 111 wird mittels eines Verzögerungselements 56, welches z.B. als λ/2 oder λ/4-Platte ausgebildet sein kann, hinsichtlich seiner Polarisationsebene um einen vorgegebenen Winkel geneigt.

Demzufolge kann ein gewisser Anteil des zweiten Lichtstrahls 111, welcher auf den weiteren polarisierenden Strahlteiler 51 trifft durch diesen hindurch zum zweiten Quellort Q2 propagieren. Dort erfährt der entsprechende Signalanteil eine Reflektion und propagiert wieder zurück zum polarisierenden Strahlteiler 52. Der durch den polarisierenden Strahlteiler 52 transmittierte und zuvor von Q2 reflektierte Anteil des zweiten Lichtstrahls 111 propagiert durch einen Polarisator 53 und wird im zweiten Detektor 121 detektiert.

Der am polarisierenden Strahlteiler 52 transmittierte Teil des zweiten Lichtstrahls 111 propagiert durch einen Polarisationsrotator 55, welcher beispielsweise als Faradayrotator implementiert sein kann, und welcher die Polarisationsebene des einfallenden Lichtes unabhängig von der Strahlrichtung jeweils um etwa 45° stets in dieselbe Richtung dreht. Der transmittierte Teil des zweiten Lichtstrahls 111 propagiert sodann durch das Stellelement 131 und wird am zweiten Zielort Z2, welcher als Spiegel 71 implementiert ist, zurückreflektiert. Auf dem Rückweg erfolgt erneut eine entsprechende Drehung der Polarisationsebene des reflektierten zweiten Lichtstrahls 111, sodass das zuvor durch den polarisierenden Strahlteiler 52 transmittierte Licht nun nahezu vollständig am polarisierenden Strahlteiler 52 reflektiert und in Richtung zum zweiten Detektor 121 umgelenkt wird. Mittels des Polarisator 53 können die an und für sich nicht interferenzfähigen Anteile der am polarisierenden Strahlteiler transmittierten und reflektierten Komponenten des zweiten Lichtstrahls 111 derart polarisationstechnisch gefiltert werden, dass Anteile gleicher Polarisation der beiden überlagerten Strahlteile am Detektor 121 interferenzfähig überlagert werden.

Auf diese Art und Weise kann mittels des zweiten Detektors 121 ein Interferenzsignal gemessen werden, welches Aufschluss über die relative Phasenbeziehung zwischen dem zweiten Lichtstrahl am zweiten Quellort Q2 und am zweiten Zielort Z2 gibt. Mittels des Rotators 55 kann gleichermaßen gewährleistet werden, dass sämtliche Leistung des zweiten Lichtstrahls 111, welche am zweiten Zielort Z2 reflektiert wird, gänzlich oder zumindest in überwiegendem Maße am polarisierenden Strahlteiler 52 reflektiert und zum Detektor 121 gelenkt wird. Eine unerwünschte Rückkopplung von Lichtintensität in den optischen Verstärker 41 kann auf diese Art und Weise auf ein Minimum reduziert, bzw. gänzlich unterdrückt oder eliminiert werden. Dies trägt zur Stabilität des Betriebs des optischen Verstärkers 41 bei.

Entlang des Kopplungspfads K propagiert ein Anteil des durch den polarisierenden Strahlteilers 51 transmittierten Lichts des ersten Lichtstrahls 11 sowie ein am selben Strahlteiler 51 reflektierten Anteils des zweiten Lichtstrahls 111. Die ursprünglich aufgrund ihrer unterschiedlichen Polarisationsrichtungen dem Strahlteiler 51 nachgelagerten Teilstrahlen von erstem Lichtstrahl 11 und zweitem Lichtstrahl 111 können durch Filterung am unter einem vorgegebenen Winkel ausgerichteten Polarisator 54 interferenzfähig gemacht werden. Die entsprechende Stellung des beispielsweise als linearer Polarisator implementierten Polarisators 54 ermöglicht es, die jeweiligen Polarisationsanteile aus den jeweiligen überlagerten Lichtstrahlen im Bereich des Kopplungspfad K aufeinander zu projizieren, sodass mit dem dritten Detektor 221 eine Interferenz zwischen dem ersten Lichtstrahl 11 und dem zweiten Lichtstrahl 111 gemessen werden kann.

Das Medium, in welchem die Teilstrahlen zwischen dem Strahlteiler 51 und dem Detektor 221 propagieren ist isotrop. D.h. dort liegen weder ein linearer noch zirkularer Dichroismus oder eine entsprechende Doppelbrechung vor. Die Felder von erstem und zweitem Lichtstrahl 11, 111 erfahren dort insoweit auch keine relativen Phasenfluktuationen zueinander. Die Messung einer Schwebungsphase am dritten Detektor 221 entspricht somit der relativen Phase an allen anderen Stellen hinter dem polarisierenden Strahlteiler 51. Gleichermaßen sollten auch die optischen Pfade zwischen den polarisierenden Strahlteilern 51, 52, den Polarisatoren 53, 54 und dem ersten Zielort Z1 isotrop sein, da sonst zum Beispiel Temperaturabhängigkeiten in der Doppelbrechung zu unerwünschten Phasenfluktuationen zwischen den etwa senkrecht zueinander polarisierten Teilstrahlen führen könnten.

Isotrope Fluktuationen dieser optischen Pfade, zum Beispiel durch Druckschwankungen werden jedoch durch die aktive Stabilisierung seitens des Regelkreises 30, 130 eliminiert. Die isotropen Pfade werden typischerweise als Freistrahloptik implementiert. Sämtliche übrigen Pfade können beispielsweise faseroptisch implementiert sein.

Die zweite Interferometeranordnung 120 bildet mit den Spiegeln 50, 71 im Bereich des zweiten Quellorts Q2 und dem zweiten Zielort Z2 ein Michelson Interferometer. Aufgrund der beschriebenen Polarisationstechnik oder Polarisationsselektion gelangt im Idealfall kein Licht aus der zweiten Interferometeranordnung 120 zurück in die erste Interferometeranordnung 20. Daher sind optischen Teilpfade, welche von der ersten Interferometeranordnung 20 und der zweiten Interferometeranordnung 120 gebildet werden quasi voneinander getrennt. Ein Übersprechen kann nur aufgrund einer nicht perfekten Polarisationsextinktion am polarisierenden Strahlteiler 51 erfolgen.

Typischerweise wird die Polarisation des ersten Lichtstrahls so eingestellt, dass ein Teil durch den polarisierenden Strahlteiler 51 auf den dritten Detektor 221 transmittiert wird. Der andere Teil wird zum Zielort Z1 reflektiert, kommt mit derselben Polarisation von dort zurück und wird daher am polarisierenden Strahlteiler 51 über den quasi reziproken Arm der ersten Interferometeranordnung 20 zurück zum Quellort Q1 reflektiert.

Ein Vorteil dieses Ansatzes ist es, dass die Baugruppe zwischen den Elementen 31 und 55 als autarke, lokal betriebene Einheit aufgebaut werden kann, die wie ein unidirektionaler Trennverstärker wirkt. Dies ist eine wesentliche Voraussetzung für den Einsatz in interkontinentalen optischen Faserverbindungen zur Übertragung hochstabiler, bzw. hochgenauer optischer Frequenzen und dementsprechender optischer Signale.

Das weitere Ausführungsbeispiel der Fig. 3 ist konzeptionell ganz ähnlich wie dasjenige der Fig. 2 aufgebaut, weshalb vorliegend hier nur noch auf die Unterschiede und die hieraus hervorgehenden Wirkungen und Effekte eingegangen wird. Der erste Zielort Z1 ist hierbei als teildurchlässiger Spiegel 50 implementiert und definiert auch hier gleichermaßen den zweiten Quellort Q2. Der 45°-Rotator 55 befindet sich hier zwischen den beiden polarisierenden Strahlteilern 51, 52. Die Ausgestaltung gemäß Fig. 3 unterscheidet sich von derjenigen nach Fig. 2 im Übrigen darin, auf welche Art und Weise der erste und der zweite Lichtstrahl 11, 111 zum ersten Zielort Z1 geführt werden, und wie das Licht für den Detektor 121 und für den Pfad zum zweiten Zielort Z2 extrahiert wird.

Im Unterschied zu Fig. 2 wird der zweite Lichtstrahl 111, welcher vom nichtreziproke Element 40 emittiert wird nicht an dem polarisierenden Strahlteiler 52 aufgeteilt, sondern transmittiert diesen in der Vorwärtsrichtung ungehindert und erreicht dann den polarisierenden Strahlteiler 51. Diesen transmittiert er ebenfalls zu einem Großteil und gelangt zu dem teilreflektierenden Spiegel 50. Der dort in Richtung Z2 transmittierte, von Vorteil größere Anteil des Lichtstrahls 111 wird am Spiegel 71, respektive dem zweiten Ziel Z2 reflektiert und am teilreflektierenden Spiegel mit dem dort reflektierten Anteil des Strahls 111 überlagert. Die so überlagerten Strahlen propagieren zurück durch den polarisierenden Strahlteiler 51. Mittels des Rotators 55 wird die Polarisationsebene auf dem Rückweg so gedreht, dass das am Ziel Z2 und am teilreflektierenden Spiegel 50 reflektierte Licht effizient am polarisierenden Strahlteiler 52 reflektiert wird und auf den Detektor 121 gelangt. Dort kann derjenige Teil des zweiten Lichtstrahls 111, welcher einerseits am teilreflektierenden Spiegel 50 des ersten Zielorts Z1, der identisch ist mit dem zweiten Quellort Q2, reflektiert wurde und derjenige Teil des zweiten Lichtstrahls 111, welcher am zweiten Zielort Z2 reflektiert wurde interferometrisch zur Überlagerung gebracht werden, sodass ein entsprechendes Interferenzsignal detektiert werden kann.

Der Kopplungspfad K erstreckt sich auch hier, ähnlich wie in Fig. 2, zwischen dem polarisierenden Strahlteiler 51 und dem dritten Detektor 221. Zwischen dem Strahlteiler 51 und dem dritten Detektor 221 ist abermals ein Polarisator 54 vorgesehen, um die an ansonsten nicht miteinander interferierenden Komponenten der am polarisierenden Strahlteiler 51 einerseits reflektierten andererseits transmittierten Teilstrahlen interferenzfähig zu machen und somit eine optische Kopplung zwischen dem ersten Interferometer 20 und dem zweiten Interferometer 120 zu ermöglichen.

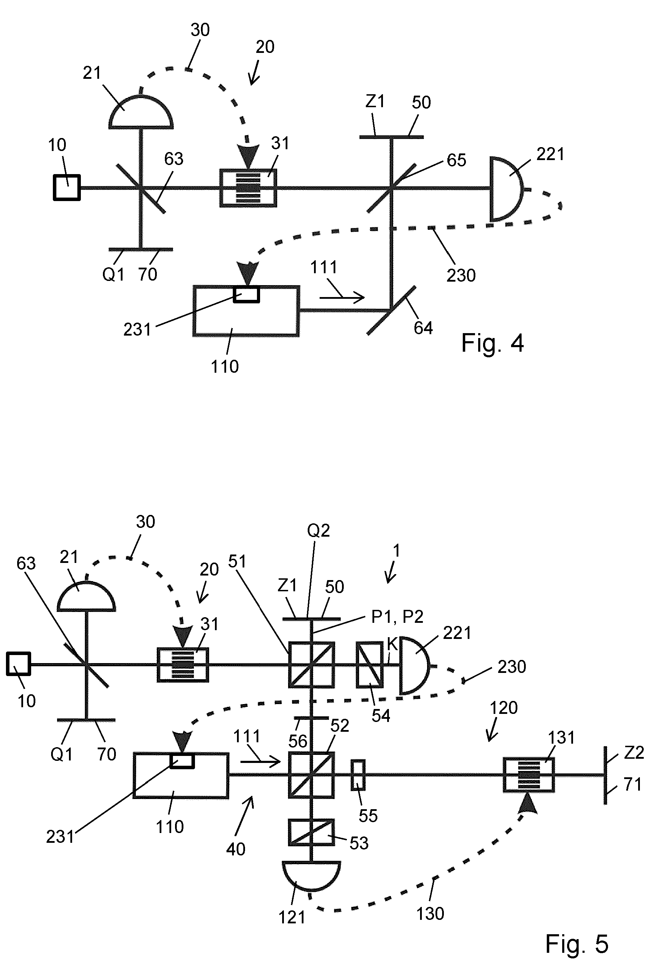

Im Ausführungsbeispiel der Fig. 4 ist schematisch gezeigt, dass die Signale des dritten Detektors 221 auch zur phasenstabilen Ankopplung einer weiteren Lichtquelle 110 genutzt werden können. Die zweite Lichtquelle 110 ist hierbei zur Erzeugung des zweiten Lichtstrahls 111 vorgesehen. Sie kann ein integriertes Stellglied 231 aufweisen, welches über einen dritten Regelkreis 230 mittels Signalen vom dritten Detektor 221 zur phasenstabilen Anbindung der Lichtquelle 110 an das Lichtfeld der ersten Lichtquelle 10 gekoppelt werden kann.

Im Ausführungsbeispiel der Fig. 5 ist eine solche Anwendung einer Lichtquelle 110 in das Ausführungsbeispiel der Fig. 2 integriert. Hier wird das nicht reziproke optische Element 40 durch eine separate Lichtquelle 110 ersetzt. Die erste Interferometeranordnung 20 erstreckt sich auch hier über ein Michelson-Interferometer vom ersten Quellort Q1 zum ersten Zielort Z1. Anstelle eines optischen Verstärkers 41 im Ausführungsbeispiel der Fig. 2 ist nun im Ausführungsbeispiel der Fig. 5 eine über den dritten Regelkreis 230 phasenstarr an den dritten Detektor 221 gekoppelte Lichtquelle 110 vorgesehen.

Diese kann typischerweise als Laser implementiert sein. Das Schwebungssignal, welches am dritten Detektor 221 detektierbar ist, kann für einen sogenannten Offset-Frequenz-Phasenlock der Laserfrequenz der Lichtquelle 110 genutzt werden, wodurch der zweite Lichtstrahl phasenstarr mit einem Frequenzoffset an den ersten Lichtstrahl 11 angebunden werden kann. Auch hier fungiert der Spiegel 50 gleichermaßen als erster Zielort Z1 und als zweiter Quellort Q2. Ein Übersprechen der einzelnen Teilpfade wird auch hier durch Implementierung der bereits zuvor, in Fig. 2 beschriebenen Polarisationstechniken unterdrückt.

Bei dieser Ausgestaltung der Fig. 5 ist es von besonderem Vorteil, dass ein phasenstarr angebundener Laser 110 gegenüber einem etwa breitbandigen optischen Verstärker 41 eine Signalregeneration ermöglicht. Unerwünschte parasitäre spektrale Komponenten auf dem Feld des ersten Lichtstrahls 11 werden außerhalb der Regelbandbreite der phasenstabilen Anbindung des Lasers herausgefiltert.

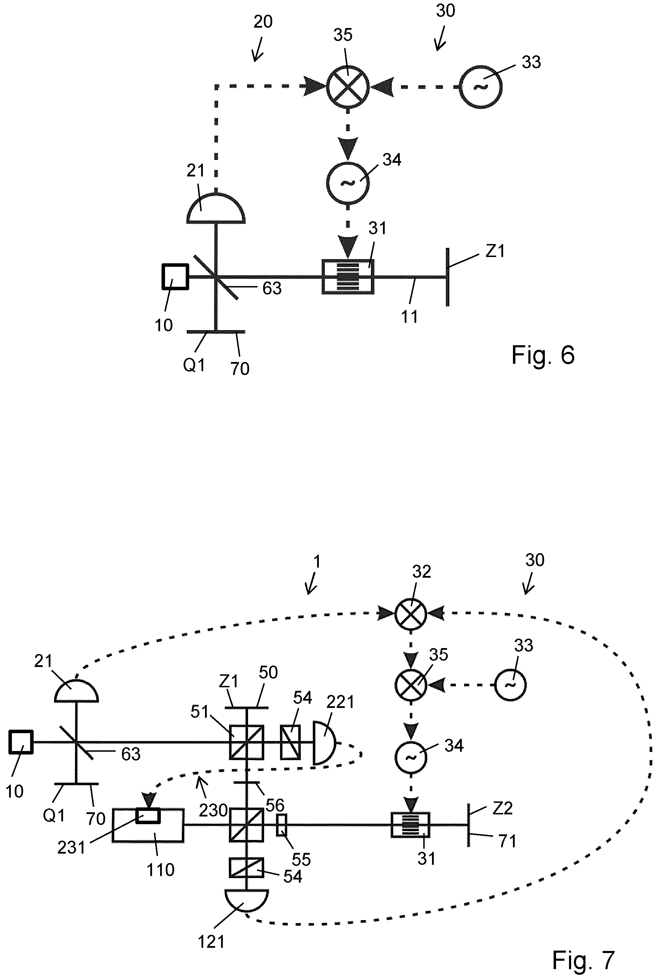

In Fig. 6 ist etwas vereinfacht ein Beispiel eines Regelkreises 30 schematisch dargestellt. Ausgehend von einem Detektor 21 können die dort gemessenen Fluktuationen, etwa ein Schwebungssignal mittels eines Phasenkomparators 35 mit einer Referenz, etwa mit der Referenzfrequenz eines Referenzoszillators 33 gemischt werden. Der niederfrequente Anteil des Ausgangssignals des Phasenkomparators ist proportional zur Phasendifferenz zwischen dessen Eingangssignalen und kann alsdann mittels eines spannungsgeregelten Oszillators 34 zur Ansteuerung des im Strahlengang des Lichtstrahls 11 angeordneten Stellglieds 31 genutzt werden.

Die gemessenen Fluktuationen und das hieraus abzuleitende elektrische Signal können durch RF Signalverarbeitung zur Ansteuerung des Stellglieds 31 derart verwendet werden, dass entstehende Frequenz- und/oder Phasenfluktuationen im Bereich zwischen dem Quellort Q1 und dem Zielort Z1 aktiv eliminiert werden können.

Im Ausführungsbeispiel der Fig. 7 ist in Anlehnung an das Ausführungsbeispiel der Fig. 5 gezeigt, dass die Vorrichtung 1 zur phasenstabilen Übertragung optischer Signale grundsätzlich auch mit nur einem einzigen Stellglied 31 ausgestattet werden kann. Hierbei werden die Signale des ersten Detektors 21 und des zweiten Detektors 121 signaltechnisch so verarbeitet, dass insgesamt nur ein einziges Stellglied 31 mit einem entsprechenden Steuersignal beaufschlagt werden muss, um die insgesamt im System auftretenden Phasen- und/oder Frequenzinstabilitäten zu kompensieren.

Regelungstechnisch ist hierbei vorgesehen, den ersten Detektor 21 und den zweiten Detektor 121 mit einem Frequenzmischer 32 zu koppeln. Der Frequenzmischer 32 ist jeweils mit dem ersten Detektor 21 und mit dem zweiten Detektor 121 signaltechnisch gekoppelt und verbunden. Ein Ausgang des Frequenzmischer 32 mündet in einen Phasenkomparator 35, welcher, wie bereits zuvor zur Fig. 6 beschrieben, das vom Frequenzmischer 32 bereitgestellte Signal mit dem Signal eines Referenzoszillators vergleicht. Aus dem Vergleich können alsdann mithilfe eines spannungsgeregelten Oszillators 34 ein Stellsignal für das Stellglied 31 erzeugt und dementsprechend das Stellglied 31 angesteuert werden.

Das Ausführungsbeispiel der Fig. 8 ist an dasjenige der Fig. 2 angelehnt. Es umfasst eine weitere Kaskade und somit eine weitere Interferometeranordnung 320, die sich an die zweite Interferometeranordnung 120 anschließt. Einerseits zeigt dieses Beispiel, dass die Vorrichtung zur phasenstabilen Übertragung 1 mehrfach kaskadiert und insoweit beliebig in der Länge erweiterbar ist. Andererseits zeigt jenes Beispiel auch eine Segmentierung bzw. die Implementierung mehrerer Zielpfade 122, 124, 126, die eine Aufteilung, bzw. Verteilung des zu übertragenden optischen Signals ermöglichen.

Im Ausführungsbeispiel der Fig. 8 ist ähnlich wie im Ausführungsbeispiel der Fig. 2 eine Erzeugung des zweiten Lichtstrahls 111 mittels eines optischen Verstärkers 41, mithin mittels eines nicht reziproken optischen Elements 40 vorgesehen. Anders als im Beispiel der Fig. 2 ist hier der dritte Detektors 221 mit dem dritten Regelkreis 230 gekoppelt, dessen drittes Stellglied 231 im Strahlengang des ersten Lichtstrahls 11 steht, welcher über den Strahlteiler 60 vom ersten Lichtstrahl 11 abgezweigt ist. Anders als im Beispiel der Fig. 2 wird hier der nicht reziproke Arm des Mach Zehnder Interferometers aktiv geregelt.

Der Zielort Z2 ist ähnlich wie im Ausführungsbeispiel der Fig. 2 implementiert. Er befindet sich nachgelagert zum zweiten Stellglied 131. Vor dem Stellglied 131 ist ein Strahlteiler 123 vorgesehen, mittels welchem mehrere Zielpfade 124, 126 vom ursprünglichen Zielpfad 122 abzweigen. Der Zielpfad 126 kann insbesondere vom Zielpfad 124 mittels eines weiteren Strahlteilers 125, 127 abgezweigt werden. Die Zielpfade 124, 126 weisen jeweils ein eigenes Stellglied 131', 131" auf. Diese sind über vorliegend nicht explizit dargestellte, sondern lediglich angedeutete Regelkreise 130, 130', 130" mit dem zweiten Detektor 121 gekoppelt.

Es sind hierbei mehrere parallele Zielorte Z2, Z2', Z2" vorgesehen. Jeder dieser Zielpfade 122, 124, 126 kann eine eigene Trennverstärkerstufe dargestellten. Die einzelnen Stellglieder 131, 131', 131" können in den einzelnen Zielpfaden 122, 124, 126 eine Art codierte Schwebungsfrequenz erzeugen, die auf einem entsprechenden Detektor 121 entsprechend detektiert werden können. Mittels der codierten Schwebungsfrequenzen kann durch eine entsprechende spektralen Signalfilterung am Detektor 121 jedes der einzelnen Stellglieder 131, 131', 131" gezielt eingestellt, bzw. angesteuert werden.

In der Ausgestaltung gemäß Fig. 8 fungiert der zweite Zielort Z2, welcher durch einen Spiegel 150 implementiert ist, zugleich als dritter Quellort Q3. Der zweite Lichtstrahl 111, welcher vom optischen Verstärker 41 erzeugt wird, gelangt über einen polarisierenden Strahlteiler 151 zum zweiten Zielort Z2 und wird von dort zurück zum polarisierenden Strahlteiler 52 reflektiert. Der der am polarisierenden Strahlteiler 151 transmittierte Teil des zweiten Lichtstrahls 111 propagiert durch den Polarisator 154 zu einem vierten Detektor 321.

Ein Teil des vom dritten Quellort Q3 reflektierten Strahls transmittiert durch den polarisierenden Strahlteiler 151 sowie durch ein nachgelagertes Verzögerungselement 156. Ähnlich wie bereits zuvor bei Ausgestaltung der Fig. 5 beschrieben ist eine zweite Lichtquelle 110 vorgesehen, die über einen vierten Regelkreis 330 phasenstarr an den vierten Detektor 321 des Kopplungspfads K' angebunden ist. Der Kopplungspfad K' erstreckt sich zwischen dem polarisierenden Strahlteiler 151 und dem vierten Detektor 321.

Insoweit wiederholt die dritte Interferometeranordnung 320 im Wesentlichen den Aufbau der zweiten Interferometeranordnung 120. Der polarisierende Strahlteiler 152 entspricht dem Strahlteiler 52. Der Rotator 155 entspricht dem Rotator 55. Der Polarisator 153 entspricht dem Polarisator 53 und der weitere Detektor, d.h. der fünfte Detektor 421 entspricht funktionsmäßig dem zweiten Detektor 121.

Von diesem gehen wiederum mehrere Regelkreise 430, 430', 430" aus, die jeweils zur Ansteuerung eines Stellglieds 431, 431', 431" ausgebildet sind. Auch hier befinden sich die weiteren Stellglieder 431, 431', 431" in einzelnen Zielpfaden 322, 324, 326, die parallel voneinander abzweigen und die jeweils einen weiteren Zielort Z3, Z3', Z3" aufweisen oder bilden.

Bei der weiteren Ausführungsform der Fig. 9 sind mehrere Quellen Q1, Q1' vorgesehen, die beispielsweise von jeweils einer Lichtquelle 10, 10' gespeist sind. Bei den Lichtquellen 10, 10' kann es sich um ultrastabile Laser handeln. Insgesamt können auch weitaus mehr Quellen Q1, Q1', Q1" mit jeweils einer Lichtquelle miteinander gekoppelt werden, um insbesondere Fluktuationen der einzelnen Quellorte Q1, Q1' oder der entsprechenden Lichtquellen auszugleichen. Die weitere Lichtquelle 10' bildet quasi zusammen mit einem weiteren Strahlteiler 63' und einem weiteren Spiegel 63' einen weiteren Quellort Q1'. Strahlteiler 63', Quellort 1' und Zielort Z1 bilden erneut eine Art Michelson Interferometer.

Die vom Zielort Z1 und vom weiteren Quellort Q1' reflektierten Teilstrahlen werden am weiteren Detektor 21' detektiert und mittels eines weiteren Regelkreise 30' zur Ansteuerung eines Stellglieds 31' verwendet. Die Strahlen der Lichtquellen 10, 10' werden über die Spiegel 60 und den Strahlteiler 61 kopropagierend überlagert. Die optischen Frequenzen der so gebildeten ersten Lichtstrahlen 11, 11' weisen einen vorgegebenen Frequenzoffset zueinander auf. Eine entsprechende Frequenzverschiebung kann typischerweise mit zumindest einem der Stellglieder 31, 31' eingestellt werden.

Auf dem dritten Detektor 221 führt dies zu mehreren Schwebungssignalen. Diese können zunächst spektral voneinander getrennt werden. Ferner wird ein zweiter Lichtstrahl 111 mittels eines optischen Verstärkers 41 aus dem weiteren Lichtstrahl 11' abgezweigt. Die kopropagierenden Lichtstrahlen 11, 11', 111 sind im Bereich des Kopplungspfad K überlagert. Entsprechende Fluktuationen, bzw. Interferenzen sind mittels des dritten Detektors 221 detektierbar. Die entsprechenden Schwebungssignale, die jeweils Informationen über die Fluktuationen der ersten Lichtstrahlen 11, 11' relativ zum zweiten Lichtstrahl 111 enthalten, können spektral getrennt werden und anschließend mittels einer Signalverarbeitungseinheit 236 mittels gewichteter Addition, bzw. Subtraktion der Frequenzen zur Generierung eines Steuersignals für das dritte Stellglied 231 verwendet werden.

Auf diese Art und Weise können gewichtet gemittelte Fluktuationen der einzelnen Lichtquellen 10, 10', die auf den zweiten Lichtstrahl 111 wirken, aufgeprägt werden. So lässt sich schließlich eine Art Komposit-Nutzsignal, bzw. eine Stabilisierung des zweiten Lichtstrahls 111 erzeugen und weiterverteilen. Wobei das Nutzsignal, d.h. der zweite Lichtstrahl 111 am zweiten Zielort Z2 stabiler ist als die einzelnen Lichtquellen 10, 10' selbst, sofern diese zueinander unkorreliert fluktuieren.

Auf ähnliche Art und Weise kann dadurch zum Beispiel auch die Langzeitdrift eines Resonators eliminiert werden, nur dass das Stellsignal aus einem Vergleich mit einem langzeitstabilen Frequenzstandard, etwa einer Atomuhr bestimmt wird.

Konkret können der erste Lichtstrahl 11 als cos{*υ*₂ *t + φ*₂(*t*)} und der weitere erste Lichtstrahl 11' als cos{*υ*₁t + *φ*₁(*t*)} beschrieben werden, die einen festen Frequenz- bzw. Phasenoffset zueinander aufweisen. Die resultierende Schwebungsfrequenz am Detektor 221 kann dabei wie folgt ausgedrückt werden *f_{Schwebung}* = *cos*{(*υ*₂ - *υ*₁)*t + φ*₂(*t*) *- φ*₁(*t*)}. Die gewichtete Addition/Subtraktion mit einem Gewichtungsfaktor k und der Phasenvergleich mit einem Referenzsignal cos {*f_{ref}t + φ_{ref}*} führt letztlich am Stellglied 231, bzw. am zweiten Lichtstrahl 111 zu einem Signal der folgenden Struktur: cos{[(1 *- k*)*υ*₁ *+ kυ*₂ *± f_{ref}*]*t +* (1 *- k*)*φ*₁(*t*) *+ kφ*₂(*t*) *± φ_{ref}*}, wobei (1 - *k*)*υ*₁ + *kυ*₂ eine gewichtete gemittelte Frequenz und (*1 - k*)φ₁(*t*) *+ kφ*₂(*t*) eine gewichtet gemittelte Phase darstellen.

Das optische Ausgangssignal, mithin der zweite Lichtstrahl 111 erhält hinter dem Stellglied 231 somit eine gewichtet gemittelte Frequenz und Phase der beiden Eingangsstrahlen 11, 11'. Jener Ansatz ist natürlich auch für mehr als nur 2 Lichtquellen implementierbar. Das Referenzsignal kann ein RF-Signal sein, dass gegebenenfalls auch aus den anderen Schwebungssignalen für die interferometrische Pfadstabilisierung generiert werden kann.

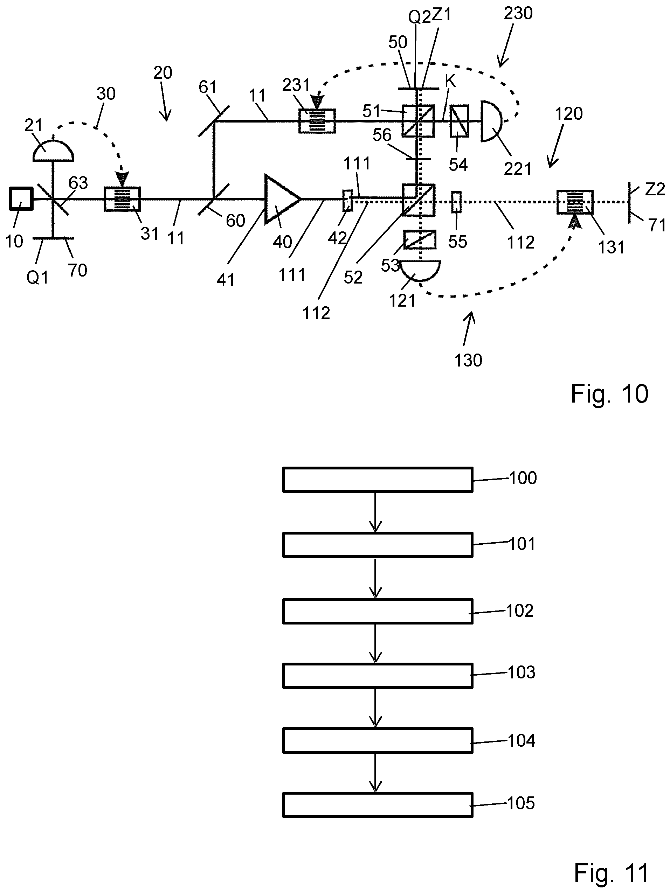

Bei dem weiteren Ausführungsbeispiel der Fig. 10, welches analog zur Ausgestaltung der Fig. 2 implementiert ist kann zusätzlich zum optischen Verstärker 41 im Strahlengang des zweiten Lichtstrahls 11 vor dem polarisierenden Strahlteiler 52 ein Frequenzkonverter 42 vorgesehen und im Strahlengang angeordnet sein. Die Effizienz der Wellenlängenkonversion im Bereich des Frequenzkonverters 42 ist dabei kleiner als 100 %. Dies bedeutet, dass lediglich ein Teilstrahl, mithin ein dritter Lichtstrahl 112 bei einer anderen Frequenz vom zweiten Lichtstrahl 111 abgezweigt, bzw. frequenzkonvertierter wird.

Nach der Frequenzkonversion propagieren das fundamentale Feld 111 und das konvertierte optische Feld 112 auf einem gemeinsamen Pfad und erfahren somit keine relativen Phasenfluktuationen zueinander. So kann beispielsweise ein erster Teilpfad mittels des fundamentalen Lichtstrahls der Wellenlänge des zweiten Lichtstrahls 111 stabilisiert werden. Ein anderer Pfad, nämlich der Pfad zwischen dem ersten Zielort Z1 und dem zweiten Zielort Z2 kann mittels des wellenlängenkonvertierten dritten Lichtstrahls 112 bei einer anderen Wellenlänge stabilisiert werden. Der zweite Detektor 121 detektiert ein Schwebungssignal, welches allein vom zweiten Interferometer 120 und auf Basis des in der zweiten Interferometeranordnung 120 propagierenden dritten Lichtstrahls 112 erzeugt wird.

Die optische, bzw. phasentechnische Kopplung zwischen der ersten Interferometeranordnung 20 und der zweiten Interferometeranordnung 120 erfolgt nach wie vor durch Kopropagation des ersten Lichtstrahls 11 und des zweiten Lichtstrahls 111 zwischen dem polarisierenden Strahlteiler 51 und dem dritten Detektor 221.

Im Flussdiagramm gemäß Fig. 11 sind schließlich noch einzelne Verfahrensschritte eines Verfahrens zur phasenstabilen Übertragung optischer Signale erläutert, welches mit der hier beschriebenen Vorrichtungen 1 durchgeführt werden kann. In einem ersten Schritt 100 wird hierbei ein erster Lichtstrahl mittels einer ersten Lichtquelle 10 erzeugt. In einem weiteren Schritt 101 wird der erste Lichtstrahl 11 in eine erste Interferometeranordnung 20 eingekoppelt, welche einen ersten Quellort Q1 und einen hiervon räumlich getrennten ersten Zielort Z1 umfasst. Im Schritt 102 wird mittels eines ersten Detektors eine Phase des ersten Lichtstrahls am ersten Quellort relativ zur Phase des ersten Lichtstrahls am ersten Zielort ermittelt. Gleichermaßen wird im Schritt 103 ein zweiter Lichtstrahl in eine zweite Interferometeranordnung 120 eingekoppelt, welche optisch mit der ersten Interferometeranordnung 20 gekoppelt ist und welche einen zweiten Quellort Q2 und einen hiervon räumlich getrennten zweiten Zielort Z2 umfasst. Im Schritt 104 wird mittels eines zweiten Detektors eine Phase des zweiten Lichtstrahls 111 am zweiten Quellort Q2 relativ zur Phase des zweiten Lichtstrahls 111 am zweiten Zielort Z2 ermittelt.

Schließlich wird im Schritt 105 mittels zumindest eines ersten, im Strahlengang des ersten Lichtstrahls 11 und/oder im Strahlengang des zweiten Lichtstrahls 111 angeordneten Stellglieds 31, 131 eines Regelkreises 30, 130, welcher wiederum signaltechnisch mit dem ersten Detektor 21 und mit dem zweiten Detektor 121 gekoppelt ist, eine feste Phasenbeziehung zwischen der Phase des ersten Lichtstrahls 11 am ersten Quellort Q1 und der Phase des zweiten Lichtstrahls 111 am zweiten Zielort Z2 eingestellt, geregelt oder fixiert.

Es versteht sich natürlich von selbst, dass die hier sukzessive beschriebenen Schritte 100-105 simultan und permanent ablaufen, um eine phasenstabile Übertragung optischer Signale bauen dem ersten Quellort Q1 zum zumindest zweiten Zielort Z2 zu gewährleisten.

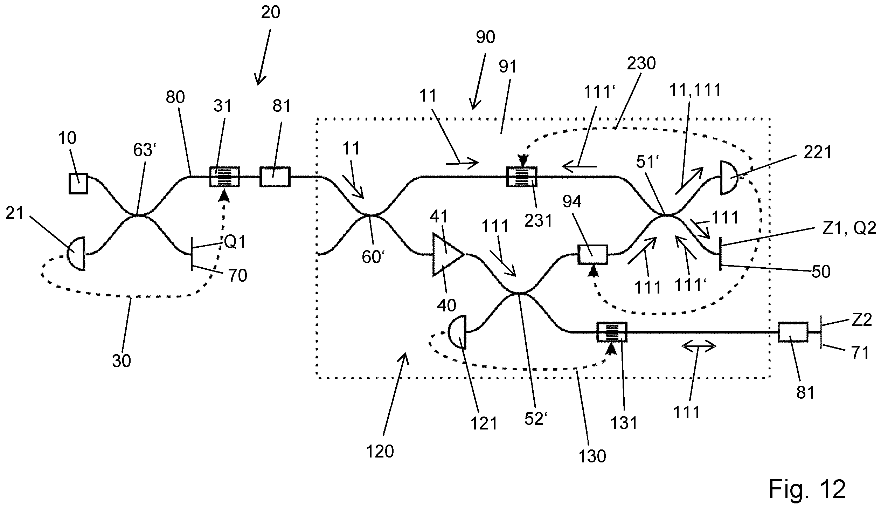

Das weitere Ausführungsbeispiel einer Vorrichtung 1 zur phasenstabilen Übertragung optischer Signale gemäß Fig. 12 ist konzeptionell identisch, bzw. weitreichend analog zum Ausführungsbeispiel der Fig. 2 aufgebaut. Insoweit und sofern nicht anderweitig spezifiziert werden hier identische oder ähnliche Bezugszeichen für funktionell identische oder ähnliche Komponenten verwendet, weshalb hier weitreichend auf die Beschreibung zur Fig. 2 verwiesen werden kann.

Das Ausführungsbeispiel der Fig. 12 ist überwiegend fasertechnisch, ggf. sogar gänzlich fasertechnisch implementiert. Die optischen Pfade zwischen der Lichtquelle 10 und dem ersten Zielort Z1 sowie die optischen Pfade zwischen dem ersten Zielort Z1 und dem zweiten Zielort Z2 sind durch optische Fasern 80 bereitgestellt. Hierbei können insbesondere vergleichsweise lange Faserstrecken 81, die mehrere Kilometer, d.h. bis zu 50 km, bis zu 100 km und mehr Kilometer betragen können, innerhalb der ersten und/oder der zweiten Interferometeranordnung 20, 120 implementiert werden.

Die vergleichsweise langen, d.h. in ihrer Länge durchaus mehrere Kilometer aufweisenden Faserstrecken sind in Fig. 12 lediglich schematisch dargestellt.

Die Strahlteiler 63, 60, 52 und 51 sind im Ausführungsbeispiel gemäß Fig. 12 durch faseroptische Koppler 63', 60', 52', 51' ersetzt worden. Sie erfüllen aber hinsichtlich der Umlenkung der einzelnen Lichtstrahlen 11, 111 eine weitreichend ähnliche, bzw. identische Funktion.

Wie bereits zur Fig. 2 erläutert, ist zur Erzeugung des zweiten Lichtstrahls 111 ein nicht reziprokes optisches Element 40 in Form eines optischen Verstärkers 41 vorgesehen. Die seitens des optischen Verstärkers 41 bereitgestellte Verstärkung des ersten Lichtstrahls 11 zur Erzeugung des zweiten Lichtstrahls 111 ist für die Übertragung optischer Signale über große Distanzen von Vorteil. Der zweite Lichtstrahl 111 ist gegenüber dem ersten Lichtstrahl 11 vergleichsweise leistungsstark.

Im Unterschied zum Ausführungsbeispiel gemäß Fig. 2 ist nach dem Ausführungsbeispiel gemäß Fig. 12 vorgesehen, dass zur Stabilisierung des optischen Pfads, welcher sich vom ersten Quellort Q1 zum ersten Zielort Z1 erstreckt, anstelle des am Spiegel 50 reflektierten ersten Strahls 11 nun der am Spiegel 50, und damit am ersten Zielort Z1 reflektierte und immer noch verhältnismäßig leistungsstarke Anteil 111' des zweiten Lichtstrahls 111 verwendet wird.

Der insoweit reflektierte Anteil 111' des zweiten Lichtstrahls 111 ist am ersten Zielort Z1 relativ zum ersten Lichtstrahl 11 pfad- bzw. phasenstabilisiert. Auf diese Art und Weise wird erreicht, dass der reflektierte Anteil 111' des leistungsstarken zweiten Lichtstrahls 111 nicht nur zum zweiten Zielort Z2 propagiert, sondern über den ersten Zielort Z1 und über denjenigen Pfad, entlang welchem der erste Lichtstrahl 11 in Vorwärtsrichtung zum ersten Zielort Z1 propagiert, nun in entgegengesetzter Richtung zurück zum ersten Detektor 21 propagiert.

Somit können unweigerliche Intensitätsverluste auf dem Rückweg vom ersten Zielort Z1 zum ersten Quellort Q1 innerhalb der ersten und/oder zweiten Interferometeranordnung 20, 120 effektiv ausgeglichen werden. Dies ermöglicht es, in der ersten Interferometeranordnung 20 und/oder in der zweiten Interferometeranordnung 120 eine vergleichsweise lange Faserstrecke 81 zu implementieren.

Die relative Phasenlage der Lichtstrahlen 11 und 111' in den optischen Pfaden zwischen den Faserkopplern 61', 51' können hierbei, wie bereits zuvor zum Ausführungsbeispiel der Fig. 2 erläutert, mittels dem dritten Detektor 221 und dem dritten Stellglied 231 relativ zueinander stabilisiert werden.

Ein Schwebungssignal auf dem ersten Detektor 21, das aus der Interferenz zwischen dem vom Spiegel 70, respektive am ersten Quellort Q1 reflektierten ersten Strahl 11 und dem am Spiegel 50, respektive am ersten Zielort Z1 reflektierten Strahlanteil 111' resultiert, kann durch seine Schwebungsfrequenz von den übrigen Signalen auf diesem Detektor 21 unterschieden und durch spektrale Filterung vor der Weiterverarbeitung zur Erzeugung eines Signals zur Ansteuerung des Stellgliedes 31 bzw. der Stellglieder getrennt werden.

Damit die Strahlen 11 und 111' auf dem Detektor 221 interferieren, müssen ihre Polarisationen aufeinander projiziert werden. Hierzu kann z.B. ein Polarisationssteller 94 in der ersten und/oder in der zweiten Interferometeranordnung 20, 120 vorgesehen werden. Mittels des Polarisationsstellers 94 kann zum Beispiel die Polarisationsebene des zweiten Lichtstrahls 111 auf dem Weg zum ersten Zielort Z1 bedarfsgerecht gedreht oder verändert werden. Der Polarisationssteller 94 kann beispielsweise signaltechnisch mit dem dritten Detektor 221 gekoppelt sein.

Ein Signal zur Regelung der Polarisation kann aus der Amplitude des Schwebungssignals des dritten Detektors 221 abgeleitet werden.

Das Ausführungsbeispiel gemäß Fig. 12 löst bisher ungelöste Probleme bei der Übertragung optischer Signale mit hochstabilen optischen Frequenzen über LangstreckenFaserverbindungen, insbesondere auch über interkontinentale Seekabel.

Langstreckenfaserverbindungen und insbesondere Seekabel sind überwiegend als nicht-polarisationserhaltende Fasern auszuführen. Wegen der großen Verluste auf den langen Faserstrecken 81 sind die ansonsten auf dem ersten Detektor 21 detektierbaren und am zweiten Zielort Z2 reflektierten Signale des zweiten Lichtstrahls 111 bereits so stark abgeschwächt, dass sie dort nicht stören. Daher kann bei dem Ausführungsbeispiel gemäß Fig. 12 auf eine beim Ausführungsbeispiel der Fig. 2 realisierte Strahlunterdrückung mittels der dort beschriebenen Polarisationstechnik verzichtet werden. Für das Ausführungsbeispiel der Fig. 12 wird insoweit auch keine freie Strahlpropagation benötigt.

Die zweite Interferometeranordnung 120, aber auch Teile der ersten Interferometeranordnung 20, können größtenteils innerhalb eines Gehäuses 91 einer Verstärkereinheit 90 angeordnet sein. Das Gehäuse 91 kann als abgeschlossenes, d.h. wasser- und staubdichtes Gehäuse implementiert sein und kann abgesehen von einer Energieversorgung etwa für den optischen Verstärker 41, für den Polarisationssteller 94, für die Detektoren 121, 221, für die zugehörigen Regelkreise 130, 230 und/oder für Stellglieder 131, 231 vollkommen autark ausgestaltet sein. Dies ermöglicht es, die Verstärkereinheit 90 beispielsweise in eine Langstreckenübertragung, beispielsweise in eine Seekabelanordnung einzubinden.

Bei nicht polarisationserhaltenden optischen Pfaden im Bereich der ersten und/oder zweiten Interferometeranordnung 20, 120 sind die die Quellorte Q1, Q2 und die Zielorte Z1, Z2 von Vorteil als Faradayspiegel auszuführen. Diese weisen typischerweise einen Faradayrotator, etwa einen 45° Faradayrotator vor einem Spiegel auf.

### Bezugszeichenliste

- 1: Vorrichtung
- 10: Lichtquelle
- 11: Lichtstrahl
- 20: Interferometeranordnung
- 21: Detektor
- 30: Regelkreis
- 31: Stellglied
- 32: Frequenzmischer
- 33: Referenzoszillator
- 34: spannungsgeregelter Oszillator
- 35: Phasenkomparator
- 40: nicht reziprokes optisches Element
- 41: optischer Verstärker
- 42: Frequenzkonverter
- 50: Spiegel
- 51: Strahlteiler
- 52: Strahlteiler
- 53: Polarisator
- 54: Polarisator
- 55: Rotator
- 56: Verzögerungselement
- 60: Strahlteiler
- 61: Spiegel
- 63: Strahlteiler
- 64: Spiegel
- 65: Strahlteiler
- 70: Spiegel
- 71: Spiegel
- 80: Faser
- 81: Faserstrecke
- 90: Verstärkereinheit
- 91: Gehäuse
- 94: Polarisationssteller
- 110: Lichtquelle
- 111: Lichtstrahl
- 112: frequenzkonvertierter Lichtstrahl
- 120: Interferometeranordnung
- 121: Detektor
- 122: Zielpfad
- 123: Strahlteiler
- 124: Zielpfad
- 125: Strahlteiler
- 126: Zielpfad
- 127: Strahlteiler
- 130: Regelkreis
- 131: Stellglied
- 150: Spiegel
- 151: Strahlteiler
- 152: Strahlteiler
- 153: Polarisator
- 154: Polarisator
- 155: Rotator
- 156: Verzögerungselement
- 221: Detektor
- 230: Regelkreis
- 231: Stellglied
- 236: Signalverarbeitungseinheit
- 320: Interferometeranordnung
- 321: Detektor
- 322: Zielpfad
- 324: Zielpfad
- 326: Zielpfad
- 430: Regelkreis
- 431: Stellglied
- Q1, Q2: Quellort
- Z1, Z2: Zielort
- P1, P2: Pfadabschnitt
- K: Kopplungspfad

## Patentansprüche

1. Vorrichtung zur phasenstabilen Übertragung optischer Signale mit:
- einer ersten Lichtquelle (10) zur Emission eines ersten Lichtstrahls (11),
- einer ersten Interferometeranordnung (20), in welche der erste Lichtstrahl (11) eingekoppelt ist und welche einen ersten Quellort (Q1) und einen hiervon räumlich getrennten ersten Zielort (Z1) umfasst, wobei mittels eines ersten Detektors (21) eine Phase des ersten Lichtstrahls (11) am ersten Quellort (Q1) relativ zur Phase des ersten Lichtstrahls (11) am ersten Zielort (Z1) ermittelbar ist,
- einer zweiten Interferometeranordnung (120), welche einen zweiten Quellort (Q2) und einen hiervon räumlich getrennten zweiten Zielort (Z2) für einen zweiten Lichtstrahl (111) umfasst, wobei mittels eines zweiten Detektors (121) eine Phase des zweiten Lichtstrahls (111) am zweiten Quellort (Q2) relativ zur Phase des zweiten Lichtstrahls (111) am zweiten Zielort (Z2) ermittelbar ist, wobei die zweite Interferometeranordnung (120) optisch mit der ersten Interferometeranordnung (20) gekoppelt ist und wobei der erste Zielort (Z1) mit dem zweiten Quellort (Q2) räumlich überlappt, und mit
- zumindest einem Regelkreis (30, 130), welcher signaltechnisch mit dem ersten Detektor (21) und mit dem zweiten Detektor (121) gekoppelt ist und welcher zumindest ein erstes, im Strahlengang des ersten Lichtstrahls (11) und/oder des zweiten Lichtstrahls (111) angeordnetes Stellglied (31, 131) aufweist, mittels welchem eine feste Phasenbeziehung zwischen der Phase des ersten Lichtstrahls am ersten Quellort (Q1) und der Phase des zweiten Lichtstrahls (111) am zweiten Zielort (Z2) einstellbar, regelbar oder fixierbar ist.

2. Vorrichtung nach Anspruch 1, wobei die erste Interferometeranordnung (20) einen ersten Pfadabschnitt (P1) aufweist, entlang welchem der erste Lichtstrahl (11) propagiert und wobei die zweite Interferometeranordnung (120) einen zweiten Pfadabschnitt (P2) aufweist, entlang welchem der zweite Lichtstrahl (111) propagiert und wobei der erste Pfadabschnitt (P1) und der zweite Pfadabschnitt (P2) räumlich überlappen.

3. Vorrichtung nach Anspruch 2, wobei der erste Pfadabschnitt (P1) und der zweite Pfadabschnitt (P2) von einem zumindest teilreflektierenden Spiegel (50) begrenzt sind, welcher Bestandteil der ersten Interferometeranordnung (20) und der zweiten Interferometeranordnung (120) ist.

4. Vorrichtung nach Anspruch 3, wobei der zumindest teilreflektierende Spiegel (50) den ersten Zielort (Z1) und/oder den zweiten Quellort (Q2) bildet.

5. Vorrichtung nach einem der vorhergehenden Ansprüche, wobei der erste Quellort (Q1) und/oder der zweite Zielort (Z2) einen zumindest teilreflektierenden Spiegel (70, 71) aufweisen.

6. Vorrichtung nach einem der vorhergehenden Ansprüche, wobei der zweite Lichtstrahl (111) mittels eines Strahlteilers (61) vom ersten Lichtstrahl (11) abgezweigt ist.

7. Vorrichtung nach Anspruch 6, ferner mit einem optisch nicht reziproken Element (40) im Strahlengang des zweiten Lichtstrahls (111).

8. Vorrichtung nach Anspruch 6 oder 7, wobei im Strahlengang des zweiten Lichtstrahls (111) ein optischer Verstärker (141) angeordnet ist.

9. Vorrichtung nach einem der vorhergehenden Ansprüche, wobei aus dem zweiten Lichtstrahl (111) mittels eines Frequenz Konverters (42) ein dritter Lichtstrahl (112) mit fester Phasenbeziehung zum zweiten Lichtstrahl (111) abgeleitet ist, wobei der dritte Lichtstrahl (112) mit dem zweiten Lichtstrahl zumindest bereichsweise räumlich überlappt und eine andere Frequenz als der erste Lichtstrahl (11) und/oder als der zweite Lichtstrahl (111) aufweist.

10. Vorrichtung nach einem der vorhergehenden Ansprüche, wobei zumindest ein Teilstrahl des ersten Lichtstrahls (11) und zumindest ein Teilstrahl des zweiten Lichtstrahls (111) entlang eines Kopplungspfads (K) propagieren, der in einen dritten Detektor (221) mündet, mittels welchem eine Phasenbeziehung zwischen dem ersten Lichtstrahl (11) und dem zweiten Lichtstrahl (111) im Bereich des Kopplungspfads (K) ermittelbar ist.

11. Vorrichtung nach einem der vorhergehenden Ansprüche, wobei der Regelkreis (30, 130) zur Verarbeitung von Signalen mehrerer Detektoren (21, 121, 221) und zur Ansteuerung zumindest eines im Strahlengang zwischen dem ersten Quellort (Q1) und dem zweiten Zielort (Z2) angeordneten Stellglieds (31, 131) ausgestaltet ist.

12. Vorrichtung nach einem der vorhergehenden Ansprüche, wobei die erste Interferometeranordnung (20) einen ersten polarisierenden Strahlteiler (51) und wobei die zweite Interferometeranordnung (120) einen zweiten polarisierenden Strahlteiler (52) aufweist, welche beide im Strahlengang des ersten Lichtstrahls (11) und/oder im Strahlengang des zweiten Lichtstrahls (111) angeordnet sind.

13. Vorrichtung nach einem der vorhergehenden Ansprüche, wobei die zweite Interferometeranordnung (120) einen ersten Zielpfad (122) und zumindest einen zweiten Zielpfad (124, 126) aufweist, welcher mittels eines Strahlteilers (123, 125, 127) vom ersten Zielpfad (122) abzweigt, wobei der zweite Zielort (Z2) im ersten Zielpfad (122) und ein weiterer zweiter Zielort (Z2', Z2") im zweiten Zielpfad (124, 126) angeordnet ist und wobei zumindest einer von erstem und zweitem Zielpfad (122, 124) ein eigenes signaltechnisch mit dem zweiten Detektor (121) gekoppeltes Stellglied (131', 131") zum Einstellen, Regeln oder Fixieren der Phase des zweiten Lichtstrahls (111) am nachgelagerten zweiten Zielort (Z2', Z2") relativ zur Phase des ersten Lichtstrahls (11) am ersten Quellort (Q1) aufweist.

14. Vorrichtung nach einem der vorhergehenden Ansprüche, welche zumindest eine weitere Lichtquelle (10') zur Erzeugung zumindest eines weiteren Lichtstrahls (11) aufweist, welcher gegenüber dem ersten Lichtstrahl (11) frequenzverschoben und überlagert mit dem ersten Lichtstrahl (11) an einem Detektor (121, 221) ein mittels einer RF-Signalverarbeitungseinheit (236) des zumindest einem Regelkreis (230) spektral trennbares Schwebungssignal erzeugt, auf Basis dessen das zumindest eine Stellglied (231) die feste Phasenbeziehung zwischen der Phase des ersten Lichtstrahls (11) am ersten Quellort (Q1) und der Phase des zweiten Lichtstrahls (111) am zweiten Zielort (Z2) einstellbar, regelbar oder fixierbar ist.

15. Verfahren zur phasenstabilen Übertragung optischer Signale, wobei:
- ein erster Lichtstrahl (11) mittels einer ersten Lichtquelle (10) erzeugt wird,
- der erste Lichtstrahl (11) in eine erste Interferometeranordnung (20) eingekoppelt wird, welche einen ersten Quellort (Q1) und einen hiervon räumlich getrennten ersten Zielort (Z1) umfasst,
- wobei mittels eines ersten Detektors (21) eine Phase des ersten Lichtstrahls (11) am ersten Quellort (Q1) relativ zur Phase des ersten Lichtstrahls (11) am ersten Zielort (Z1) ermittelt wird,
- ein zweiter Lichtstrahl (111) in eine zweite Interferometeranordnung (120) eingekoppelt wird, welche optisch mit der ersten Interferometeranordnung (20) gekoppelt ist und welche einen zweiten Quellort (Q2) und einen hiervon räumlich getrennten zweiten Zielort (Z2) umfasst, wobei der erste Zielort (Z1) mit dem zweiten Quellort (Q2) räumlich überlappt,
- wobei mittels eines zweiten Detektors (121) eine Phase des zweiten Lichtstrahls (111) am zweiten Quellort (Q2) relativ zur Phase des zweiten Lichtstrahls (111) am zweiten Zielort (Z2) ermittelt wird und
- wobei mittels zumindest eines ersten im Strahlengang des ersten Lichtstrahls (11) und/oder des zweiten Lichtstrahls (111) angeordneten Stellglieds (31, 131) eines Regelkreises (30, 130), welcher signaltechnisch mit dem ersten Detektor (21) und mit dem zweiten Detektor (121) gekoppelt ist eine feste Phasenbeziehung zwischen der Phase des ersten Lichtstrahls am ersten Quellort (Q1) und der Phase des zweiten Lichtstrahls (111) am zweiten Zielort (Z2) eingestellt, geregelt oder fixiert wird.

## Claims

1. Device for the phase-stable transmission of optical signals comprising:
- a first light source (10) for emitting a first light beam (11),
- a first interferometer arrangement (20), into which the first light beam (11) is coupled and which comprises a first source location (Q1) and a first target location (Z1) spatially separated therefrom, wherein a phase of the first light beam (11) at the first source location (Q1) relative to the phase of the first light beam (11) at the first target location (Z1) is determinable by means of a first detector (21),
- a second interferometer arrangement (120), which comprises a second source location (Q2) and, spatially separated therefrom, a second target location (Z2) for a second light beam (111), wherein a phase of the second light beam (111) at the second source location (Q2) relative to the phase of the second light beam (111) at the second target location (Z2) is determinable by means of a second detector (121), wherein the second interferometer arrangement (120) is optically coupled to the first interferometer arrangement (20) and wherein the first target location (Z1) spatially overlaps the second source location (Q2), and comprising
- at least one closed-loop control circuit (30, 130) coupled to the first detector (21) and to the second detector (121) in terms of signalling and having at least one first actuator (31, 131) which is arranged in the beam path of the first light beam (11) and/or of the second light beam (111) and by means of which a fixed phase relationship between the phase of the first light beam at the first source location (Q1) and the phase of the second light beam (111) at the second target location (Z2) is adjustable, controllable or fixable.

2. Device according to Claim 1, wherein the first interferometer arrangement (20) has a first path section (P1), along which the first light beam (11) propagates, and wherein the second interferometer arrangement (120) has a second path section (P2), along which the second light beam (111) propagates, and wherein the first path section (P1) and the second path section (P2) spatially overlap.

3. Device according to Claim 2, wherein the first path section (P1) and the second path section (P2) are delimited by an at least partially reflective mirror (50), which is part of the first interferometer arrangement (20) and of the second interferometer arrangement (120).

4. Device according to Claim 3, wherein the at least partially reflective mirror (50) forms the first target location (Z1) and/or the second source location (Q2).

5. Device according to any of the preceding claims, wherein the first source location (Q1) and/or the second target location (Z2) have/has an at least partially reflective mirror (70, 71).

6. Device according to any of the preceding claims, wherein the second light beam (111) is branched off from the first light beam (11) by means of a beam splitter (61).

7. Device according to Claim 6, furthermore comprising an optically non-reciprocal element (40) in the beam path of the second light beam (111).

8. Device according to Claim 6 or 7, wherein an optical amplifier (141) is arranged in the beam path of the second light beam (111).

9. Device according to any of the preceding claims, wherein a third light beam (112) with a fixed phase relationship with respect to the second light beam (111) is derived from the second light beam (111) by means of a frequency converter (42), wherein the third light beam (112) at least regionally spatially overlaps the second light beam and has a different frequency from that of the first light beam (11) and/or the second light beam (111).

10. Device according to any of the preceding claims, wherein at least one partial beam of the first light beam (11) and at least one partial beam of the second light beam (111) propagate along a coupling path (K) leading into a third detector (221), by means of which a phase relationship between the first light beam (11) and the second light beam (111) in the region of the coupling path (K) is determinable.

11. Device according to any of the preceding claims, wherein the closed-loop control circuit (30, 130) is configured for processing signals of a plurality of detectors (21, 121, 221) and for controlling at least one actuator (31, 131) arranged in the beam path between the first source location (Q1) and the second target location (Z2).

12. Device according to any of the preceding claims, wherein the first interferometer arrangement (20) has a first polarizing beam splitter (51) and wherein the second interferometer arrangement (120) has a second polarizing beam splitter (52), which are both arranged in the beam path of the first light beam (11) and/or in the beam path of the second light beam (111).

13. Device according to any of the preceding claims, wherein the second interferometer arrangement (120) has a first target path (122) and at least one second target path (124, 126) branching off from the first target path (122) by means of a beam splitter (123, 125, 127), wherein the second target location (Z2) is arranged in the first target path (122) and a further second target location (Z2', Z2") is arranged in the second target path (124, 126) and wherein at least one of the first and second target paths (122, 124) has its own actuator (131', 131") coupled to the second detector (121) in terms of signalling and serving for adjusting, controlling or fixing the phase of the second light beam (111) at the downstream second target location (Z2', Z2") relative to the phase of the first light beam (11) at the first source location (Q1).

14. Device according to any of the preceding claims, which has at least one further light source (10') for generating at least one further light beam (11') which, frequency-shifted relative to the first light beam (11) and superimposed with the first light beam (11) at a detector (121, 221), generates a beat signal which is spectrally separable by means of an RF signal processing unit (236) of the at least one closed-loop control circuit (230) and on the basis of which the fixed phase relationship between the phase of the first light beam (11) at the first source location (Q1) and the phase of the second light beam (111) at the second target location (Z2) is adjustable, controllable or fixable by the at least one actuator (231).

15. Method for the phase-stable transmission of optical signals, wherein:
- a first light beam (11) is generated by means of a first light source (10),
- the first light beam (11) is coupled into a first interferometer arrangement (20), which comprises a first source location (Q1) and a first target location (Z1) spatially separated therefrom,
- wherein a phase of the first light beam (11) at the first source location (Q1) relative to the phase of the first light beam (11) at the first target location (Z1) is determined by means of a first detector (21),
- a second light beam (111) is coupled into a second interferometer arrangement (120), which is optically coupled to the first interferometer arrangement (20) and which comprises a second source location (Q2) and a second target location (Z2) spatially separated therefrom, wherein the first target location (Z1) spatially overlaps the second source location (Q2),
- wherein a phase of the second light beam (111) at the second source location (Q2) relative to the phase of the second light beam (111) at the second target location (Z2) is determined by means of a second detector (121), and
- wherein a fixed phase relationship between the phase of the first light beam at the first source location (Q1) and the phase of the second light beam (111) at the second target location (Z2) is adjusted, controlled or fixed by means of at least one first actuator (31, 131) - arranged in the beam path of the first light beam (11) and/or of the second light beam (111) - of a closed-loop control circuit (30, 130) coupled to the first detector (21) and to the second detector (121) in terms of signalling.

## Revendications

1. Dispositif de transmission de signaux optiques à phase stable comprenant :
- une première source de lumière (10) pour l'émission d'un premier faisceau lumineux (11),
- un premier arrangement d'interféromètre (20) dans lequel est injecté le premier faisceau lumineux (11) et qui comprend un premier emplacement source (Q1) et un premier emplacement cible (Z1) séparé spatialement de celui-ci, une phase du premier faisceau lumineux (11) au premier emplacement source (Q1) par rapport à la phase du premier faisceau lumineux (11) au premier emplacement cible (Z1) pouvant être déterminée au moyen d'un premier détecteur (21),
- un deuxième arrangement d'interféromètre (120), qui comprend un deuxième emplacement source (Q2) et un deuxième emplacement cible (Z2) séparé spatialement de celui-ci pour un deuxième faisceau lumineux (111), une phase du deuxième faisceau lumineux (111) au deuxième emplacement source (Q2) par rapport à la phase du deuxième faisceau lumineux (111) au deuxième emplacement cible (Z2) pouvant être déterminée au moyen d'un deuxième détecteur (121), le deuxième arrangement d'interféromètre (120) étant couplé optiquement au premier arrangement d'interféromètre (20) et le premier emplacement cible (Z1) chevauchant spatialement le deuxième emplacement source (Q2), et comprenant
- au moins une boucle de régulation (30, 130), qui est couplée par échange de signaux au premier détecteur (21) et au deuxième détecteur (121) et qui présente au moins un premier actionneur (31, 131) disposé sur le chemin de faisceau du premier faisceau lumineux (11) et/ou du deuxième faisceau lumineux (111), au moyen duquel une relation de phase fixe entre la phase du premier faisceau lumineux au premier emplacement source (Q1) et la phase du deuxième faisceau lumineux (111) au deuxième emplacement cible (Z2) peut être réglée, commandée ou fixée.

2. Dispositif selon la revendication 1, dans lequel le premier arrangement d'interféromètre (20) comprend une première partie de chemin (P1) le long de laquelle le premier faisceau lumineux (11) se propage et dans lequel le deuxième arrangement d'interféromètre (120) comprend une deuxième partie de chemin (P2) le long de laquelle le deuxième faisceau lumineux (111) se propage et dans lequel la première partie de chemin (P1) et la deuxième partie de chemin (P2) se chevauchent spatialement.

3. Dispositif selon la revendication 2, dans lequel la première partie de chemin (P1) et la deuxième partie de chemin (P2) sont délimitées par un miroir au moins partiellement réfléchissant (50), lequel fait partie intégrante du premier arrangement d'interféromètre (20) et du deuxième arrangement d'interféromètre (120).

4. Dispositif selon la revendication 3, dans lequel le miroir au moins partiellement réfléchissant (50) forme le premier emplacement cible (Z1) et/ou le deuxième emplacement source (Q2).

5. Dispositif selon l'une des revendications précédentes, dans lequel le premier emplacement source (Q1) et/ou le deuxième emplacement cible (Z2) comportent un miroir au moins partiellement réfléchissant (70, 71).

6. Dispositif selon l'une des revendications précédentes, dans lequel le deuxième faisceau lumineux (111) est dévié par rapport au premier faisceau lumineux (11) au moyen d'un séparateur de faisceaux (61).

7. Dispositif selon la revendication 6, comprenant en outre un élément optiquement non réciproque (40) sur le chemin de faisceau du deuxième faisceau lumineux (111).

8. Dispositif selon la revendication 6 ou 7, dans lequel un amplificateur optique (141) est disposé sur le chemin de faisceau du deuxième faisceau lumineux (111).

9. Dispositif selon l'une des revendications précédentes, dans lequel un troisième faisceau lumineux (112) ayant une relation de phase fixe par rapport au deuxième faisceau lumineux (111) est dérivé du deuxième faisceau lumineux (111) au moyen d'un convertisseur de fréquence (42), le troisième faisceau lumineux (112) chevauchant spatialement le deuxième faisceau lumineux au moins dans certaines zones et présentant une fréquence différente de celle du premier faisceau lumineux (11) et/ou de celle du deuxième faisceau lumineux (111).

10. Dispositif selon l'une des revendications précédentes, dans lequel au moins un sous-faisceau du premier faisceau lumineux (11) et au moins un sous-faisceau du deuxième faisceau lumineux (111) se propagent le long d'un chemin de couplage (K) qui débouche sur un troisième détecteur (221), au moyen duquel une relation de phase entre le premier faisceau lumineux (11) et le deuxième faisceau lumineux (111) peut être déterminée dans la zone du chemin de couplage (K).

11. Dispositif selon l'une des revendications précédentes, dans lequel la boucle de régulation (30, 130) est conçue pour le traitement de signaux provenant de plusieurs détecteurs (21, 121, 221) et pour la commande d'au moins un actionneur (31, 131) disposé sur le chemin de faisceau entre le premier emplacement source (Q1) et le deuxième emplacement cible (Z2).

12. Dispositif selon l'une des revendications précédentes, dans lequel le premier arrangement d'interféromètre (20) présente un premier séparateur de faisceaux polarisant (51) et dans lequel le deuxième arrangement d'interféromètre (120) présente un deuxième séparateur de faisceaux polarisant (52), qui sont tous deux disposés sur le chemin de faisceau du premier faisceau lumineux (11) et/ou sur le chemin de faisceau du deuxième faisceau lumineux (111).

13. Dispositif selon l'une des revendications précédentes, dans lequel le deuxième arrangement d'interféromètre (120) présente un premier chemin de faisceau cible (122) et au moins un deuxième chemin de faisceau cible (124, 126), lequel se ramifie à partir du premier chemin de faisceau cible (122) au moyen d'un séparateur de faisceaux (123, 125, 127), le deuxième emplacement cible (Z2) étant disposé sur le premier chemin de faisceau cible (122) et un autre deuxième emplacement cible (Z2', Z2") étant disposé sur le deuxième chemin de faisceau cible (124, 126) et au moins l'un des premier et deuxième chemins de faisceau cibles (122, 124) comportant son propre actionneur (131', 131") couplé par échange de signaux au deuxième détecteur (121) pour régler, commander ou fixer la phase du deuxième faisceau lumineux (111) au deuxième emplacement cible disposé en aval (Z2', Z2") par rapport à la phase du premier faisceau lumineux (11) au premier emplacement source (Q1).

14. Dispositif selon l'une des revendications précédentes, qui comporte au moins une autre source de lumière (10') destinée à générer au moins un autre faisceau lumineux (11'), lequel est décalé en fréquence par rapport au premier faisceau lumineux (11) et, en étant superposé au premier faisceau lumineux (11) au niveau d'un détecteur (121, 221), génère un signal de battement séparable spectralement au moyen d'une unité de traitement de signal RF (236) de ladite au moins une boucle de régulation (230), sur la base duquel ledit au moins un actionneur (231) peut régler, commander ou fixer la relation de phase fixe entre la phase du premier faisceau lumineux (11) au premier emplacement source (Q1) et la phase du deuxième faisceau lumineux (111) au deuxième emplacement cible (Z2).

15. Procédé de transmission de signaux optiques à phase stable, dans lequel :
- un premier faisceau lumineux (11) est généré au moyen d'une première source de lumière (10),
- le premier faisceau lumineux (11) est injecté dans un premier arrangement d'interféromètre (20), qui comprend un premier emplacement source (Q1) et un premier emplacement cible (Z1) séparé spatialement de celui-ci,
- une phase du premier faisceau lumineux (11) au premier emplacement source (Q1) par rapport à la phase du premier faisceau lumineux (11) au premier emplacement cible (Z1) étant déterminée au moyen d'un premier détecteur (21),
- un deuxième faisceau lumineux (111) est injecté dans un deuxième arrangement d'interféromètre (120), lequel est couplé optiquement au premier arrangement d'interféromètre (20) et qui comprend un deuxième emplacement source (Q2) et un deuxième emplacement cible (Z2) séparé spatialement de celui-ci, le premier emplacement cible (Z1) chevauchant spatialement le deuxième emplacement source (Q2),
- une phase du deuxième faisceau lumineux (111) au deuxième emplacement source (Q2) par rapport à la phase du deuxième faisceau lumineux (111) au deuxième emplacement cible (Z2) étant déterminée au moyen d'un deuxième détecteur (121) et
- une relation de phase fixe entre la phase du premier faisceau lumineux au premier emplacement source (Q1) et la phase du deuxième faisceau lumineux (111) au deuxième emplacement cible (Z2) étant réglée, commandée ou fixée au moyen d'au moins un premier actionneur (31, 131) disposé sur le chemin de faisceau du premier faisceau lumineux (11) et/ou du deuxième faisceau lumineux (111) d'une boucle de régulation (30, 130), qui est couplée par échange de signaux au premier détecteur (21) et au deuxième détecteur (121).
